# EUROPÄISCHE PATENTSCHRIFT

(11) **EP 0 781 587 B1**
(45) Veröffentlichungstag und Bekanntmachung des Hinweises auf die Patenterteilung: **07.05.2003**
(21) Anmeldenummer: 96810896.9
(22) Anmeldetag: 23.12.1996
(51) Int. Cl.: B01D 46/24, B01D 46/04, B01D 39/10

(54) **Einrichtung zum Entstauben von Gas**
Apparatus for dedusting a gas
Dispositif de dépoussiérage d'un gaz

(30) Priorität: 29.12.1995 CH 370695
(43) Veröffentlichungstag der Anmeldung: 02.07.1997
(73) Patentinhaber: GLATT GMBH, 79589 Binzen (DE)
(72) Erfinder: Luy, Bernard, Dr., 79102 Freiburg (DE); Tondar, Matthias, 78966 Hausen i.W. (DE)
(74) Vertreter: Zbinden, Paul A.

(56) Entgegenhaltungen:
- EP-A- 0 572 356
- DE-U- 9 400 913
- CHEMIE TECHNIK, Bd. 23, Nr. 10, Oktober 1994, Seite 64 XP000483376 NIRO-AEROMATIC: "wirbelschichtanlagen; automatisches cip-system"

## Beschreibung

Die Erfindung betrifft eine Einrichtung zum Entstauben von Gas, insbesondere von durch ein teilchenförmiges Gut hindurchgeleitetem Gas.

Hier seien zunächst noch die im folgenden benützten Begriffe "Rohgas-Raum" und "Reingas-Raum" erläutert. Unter dem Rohgas-Raum wird ein an mindestens ein Filter angrenzender Raum verstanden, der das zu filtrierende und zu entstaubende Gas enthält und aus dem das letztere in das Filter hineinströmt. Unter einem Reingas-Raum wird dann ein an das bzw. an mindestens ein Filter angrenzender Raum verstanden, in den das Gas nach dem Durchströmen des Filters bzw. der Filter gelangt.

Die Einrichtung besitzt mindestens einen einen Rohgas-Raum umschliessenden Behälter und mindestens ein in den Rohgas-Raum hineinragendes Filter. Die Einrichtung kann zum Beispiel einen Gut-Behälter besitzen und ausgebildet sein, um Gas durch den Rohgas-Raum und ein in diesem vorhandendes, teilchenförmiges Gut hindurchzuleiten und das Gut zu bewegen sowie zu behandeln, wobei das Gut zum Beispiel mit dem Gas verwirbelt und/oder durch einen den Rohgas-Raum unten begrenzenden, eine Scheibe aufweisenden Rotor bewegt werden kann. Die Einrichtung kann beispielsweise zum Bewegen und Behandeln eines teilchenförmigen Gutes dienen, das zur Bildung eines Arzneimittels mit mindestens einem pharmazeutischen, d. h. eine biologische Wirkung ergebenden Wirkstoff vorgesehen ist. Der bzw. mindestens ein Wirkstoff kann dabei zum Beispiel in dem in festem, trockenem oder feuchtem Zustand in den Gut-Behälter eingebrachten, teilchenförmigen Gut enthalten sein. Es ist jedoch auch möglich, das teilchenförmige Gut in Gut-Behälter mit einer Flüssigkeit zu besprühen, die möglicherweise einen gelösten oder dispergierten Wirkstoff enthält. Die Einrichtung kann zusätzlich zum Gut-Behälter oder anstelle von diesem einen Nachentstauber und/oder eine sonstige Filtriervorrichtung mit einem Behälter aufweisen, der bei der Verwendung nicht selbst ein teilchenförmiges Gut enthält, dem aber von einem anderen, ein teilchenförmiges Gut enthaltenen Gut-Behälter zu entstaubendes Gas zugeführt wird. Die Einrichtung kann ferner als Sprühtrockner ausgebildet sein.

Aus der EP-A 0 572 356 und dem Inserat "Wirbelschichtanlagen Automatisches CIP-System", Chemie Technik, 23. Jahrgang, No. 10, 1994, Seite 64 bekannte Wirbelschicht-Einrichtung besitzt einen Behälter, der einen zum Verwirbeln eines teilchenförmigen Gutes dienenden Rohgas-Raum umschliesst, und mindestens ein in diesen hineinragendes, vertikales Patronenfilter mit einem Filtrationselement aus Stoff, d.h. aus einem textilen Gewebe, mit einer Sternfaltung oder aus plissiertem Metall. Der Behälter hat eine Decke, die für jedes Filter mit einem Loch versehen ist. Jedes dieser Löcher ist von einer auf der oberen Seite der Decke an dieser befestigten, zylindrischen Kappe bedeckt, die einen mit einer Gasableitung verbundenen Reingas-Raum begrenzt. Jede Kappe enthält eine Nass-Reinigungsvorrichtung bzw. Waschvorrichtung mit einem in der Nähe der Decke angeordneten, ringförmigen Sprühorgan, das nach innen gerichtete Flüssigkeits-Auslasslöcher besitzt.

Beim normalen Betrieb dieser bekannten Wirbelschicht-Einrichtungen befinden sich die Filter in einer Filtrations-Stellung, in der das obere Ende des Filters das diesem zugeordnete Loch der Decke abschliesst. Das zum Verwirbeln eines teilchenförmigen Gutes dienende Prozessgas strömt dann durch die Filter hindurch in die Reingas-Räume. Wenn die Filter mit einer Flüssigkeit gereinigt, d. h. gewaschen, werden sollen, werden sie nach der Beendigung des normalen Betriebes der Einrichtung mit einer Stellvorrichtung durch die in der Decke des Behälters vorhandenen Löcher hindurch nach oben in die Kappen hinein verschoben und während der Verschiebung bei den ringförmigen Sprühorganen mit einer Reinigungsflüssigkeit besprüht.

Bei der aus der EP-A 0 572 356 und dem gennanten Inserat bekannten Einrichtung gelangen die beim normalen Betrieb an den Rohgas-Raum des Behälters angrenzenden Aussenflächen der Filter bei einer Nass-Reinigung in die von den Kappen begrenzten Reingas-Räume. Zudem ergeben die beim normalen Betrieb durch die oberen Enden der Filter abgeschlossenen Löcher der Behälterdecke bei einer Nass-Reinigung eine Verbindung zwischen dem Rohgas-Raum und den Reingas-Räumen in den Kappen. Es besteht daher eine erhebliche Gefahr, dass die Reingas-Räume der Kappen und die Filter-Innenräume mit Material aus dem Rohgas-Raum kontaminiert werden. Dieses Material kann dann bei einem später erfolgenden Betrieb der Einrichtung vom Prozessgas aus den Kappen heraus transportiert werden und die Umgebung der Einrichtung kontaminieren. Dies ist beim Verarbeiten von giftigen Stoffen und/oder Wirkstoffen für Arzneimittel sehr nachteilig. Ferner kann bei einer Nass-Reinigung auch umgekehrt Material, das zum Beispiel bei einem vorangehenden Nass-Reinigung in die Reingas-Räume der Kappen gelangt ist, von der Reinigungsflüssigkeit in dem Rohgas-Raum gespült werden und diesen kontaminieren. Derartige Kontaminationsvorgänge können die Reinheit und Qualität des behandelten Gutes beeinträchtigen. Dies kann zum Beispiel dann sehr nachteilig sein, wenn nacheinander verschiedene Güter für die Bildung von Arzneimitteln behandelt werden, bei denen häufig extrem hohe Anforderungen an die Reinheit gestellt werden. Die Patronenfilter sind zu dem oft ziemlich gross und schwer, so dass ferner grosse und teure Führungsmittel und Stellvorrichtungen erforderlich sind, um die Filter verschiebbar zu führen und zu verschieben. Des weiteren beanspruchen die auf der Decke des Behälters vorhandenen Kappen und die Stellvorrichtungen viel Platz. Ferner behindert die Sternfaltung bzw. Plissierung der Mäntel der Filter eine einwandfreie Reinigung der Filter und reduziert die Stabilität sowie Lebensdauer der Filter.

Der Erfindung liegt die Aufgabe zugrunde eine Einrichtung zum Entstauben von Gas zu schaffen, mit der Nachteile der bekannten Einrichtungen vermieden werden können und bei der insbesondere das bzw. jedes Filter gut mit einer Flüssigkeit gereinigt werden kann, ohne dass der Rohgas-Raum durch eine das Filter überbrückende Verbindung mit einem an dieses angrenzenden Reingas-Raum verbunden wird.

Diese Aufgabe wird erfindungsgemäss durch eine Einrichtung mit den Merkmalen des Anspruchs 1 gelöst.

Vorteilhafte Ausgestaltungen der Einrichtung gehen aus den abhängigen Ansprüchen hervor.

Die erfindungsgemässe Ausbildung der Einrichtung ermöglicht, das bzw. jedes Filter in noch näher beschriebener Weise einer Nass-Reinigung zu unterziehen bzw. zu waschen, ohne dass beim Besprühen und Waschen eines Filters eine dieses überbrückende bzw. umgehende Verbindung des Rohgas-Raums mit einem mit dem Filter verbundenen Reingas-Raum entsteht. Dadurch kann vermieden werden, dass Staub und sonstige feste Stoffe aus dem Rohgas-Raum in den Reingas-Raum und von diesem in die Umgebung der Einrichtung und/oder später zurück in den Rohgas-Raum gelangen. Dies ist insbesondere beim Verarbeiten von giftigen Stoffen und/oder Wirkstoffen von grossem Vorteil.

Das bzw. jedes Sprühorgan hat vorzugsweise eine End- bzw. Stirnfläche, die in der Ruhe-Stellung mindestens annähernd und beispielsweise genau bündig mit der an den Rohgas-Raum angrenzenden Fläche des das Sprühorgan haltenden Wandungsteils ist. Ferner schliesst das bzw. jedes Sprühorgan das für dieses vorhandene Loch staubdicht ab. Der genannte Wandungsteil und das bzw. jedes von diesem gehaltene Sprühorgan bilden dementsprechend beim normalen Betrieb der Einrichtung keine Nischen und/oder Kehlen oder sonstige Toträume, in denen sich Staubpartikel oder andere Materialien festsetzen können.

Das bzw. jedes Sprühorgan ist vorzugsweise wesentlich kleiner sowie leichter als ein Filter und ragt vorzugsweise in seiner Reinigungs-Stellung vorzugsweise wesentlich weniger weit in den Rohgas-Raum hinein als das bzw. die Filter. Das bzw. jedes Sprühorgan und die zum Führen und Verschieben eines Sprühorgans dienenden Führungs- sowie Stell- und/oder Verschiebemittel können dann wesentlich kleiner und leichter ausgebildet werden als die Führungs- und Verschiebemittel, die zum Führen und Verschieben eines Filters erforderlich wären.

Der Erfindungsgegenstand wird nun anhand in der Zeichnung dargestellter Ausführungsbeispiele näher erläutert. In der Zeichnung zeigt
die Fig. 1 einen vereinfachten Vertikalschnitt durch einen Gut-Behälter und einen Nachentstauber-Behälter einer Wirbelschicht-Einrichtung zum Behandeln eines teilchenförmigen Gutes,
die Fig. 2 einen vereinfachten Horizontalschnitt entlang der Linie II-II der Fig. 1 durch den Gut-Behälter,
die Fig. 3 einen Axialschnitt durch eine erste im Gut-Behälter angeordnete Nass-Reinigungsvorrichtung mit einem sich in der Ruhe-Stellung befindenden Sprühorgan in grösserem Massstab als in der Fig. 1,
die Fig. 4 einen Axialschnitt durch eine erste Nass-Reinigungsvorrichtung, deren Sprühorgan in die Reinigungs-Stellung verschoben ist,
die Fig. 5 einen Axialschnitt durch einen Teil des Sprühorgans in grösserem Massstab als in den Figuren 3 sowie 4,
die Fig. 6 eine Draufsicht auf das sich in den Figuren 3 bis 5 oben befindende Ende des Sprühkopfes des Sprühorgans,
die Fig. 7 einen Axialschnitt durch das Sprühorgan entlang der Linie VII-VII der Fig. 6,
die Fig. 8 einen Axialschnitt durch eine andere, zweite, im Gut-Behälter angeordnete Nass-Reinigungsvorrichtung in grösserem Massstab als die Figuren 1 und 2, wobei sich das Sprühorgan in der Ruhe-Stellung befindet,
die Fig. 9 einen Axialschnitt durch den unteren Teil der zweiten Nass-Reinigungsvorrichtung, aber mit in die Reinigungs-Stellung ausgefahrenem Sprühorgan,
die Fig. 10 eine Ansicht der unteren Seite eines sieben Filter tragenden, inneren Wandungsteils eines Behälters und
die Fig. 11 eine Ansicht der unteren Seite eines Wandungsteils mit vierzehn Filtern.

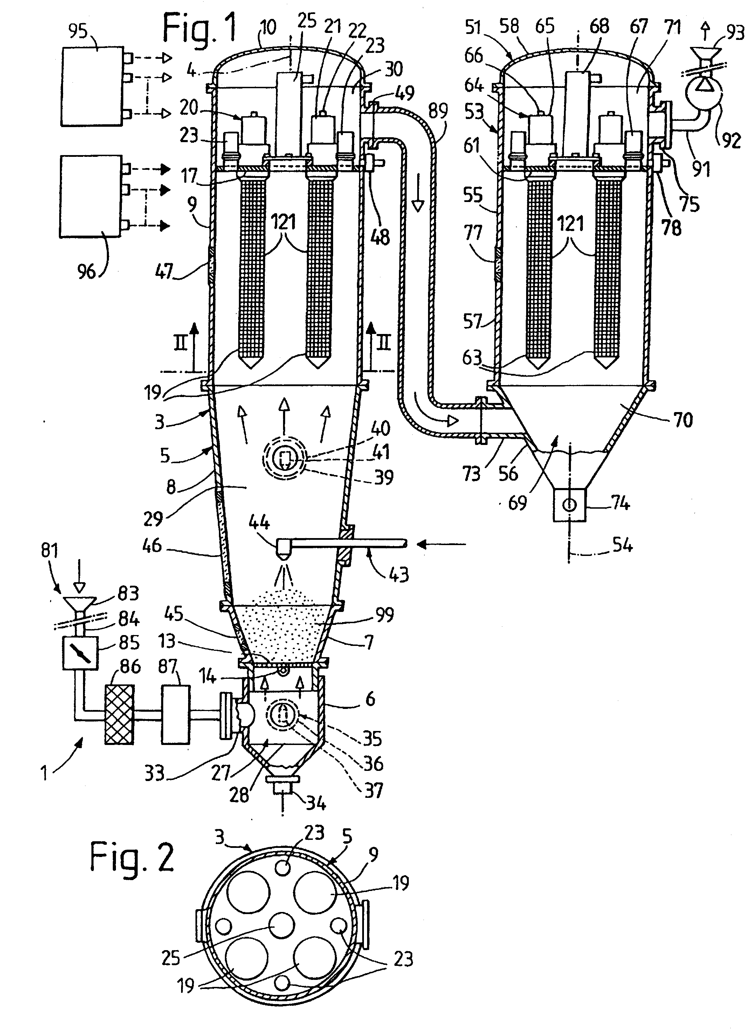

Die in der Fig. 1 ersichtliche Wirbelschicht-Einrichtung 1 besitzt einen Gut- und Wirbelschicht-Behälter 3, der im allgemeinen rotationssymetrisch zu einer vertikalen Behälterachse 4 ist. Der Behälter 3 hat eine Wandung 5. Diese ist an einem nicht gezeichneten Gestell gehalten und besitzt mehrere lösbar und dicht miteinander verbundene Wandungsteile, beispielsweise von unten nach oben einen Boden-Wandungsteil 6, einen unteren konischen Wandungsteil 7, einen oberen konischen Wandungsteil 8, einen zylindrischen Wandungsteil 9 und einen Deck-Wandungsteil 10. Ein Siebboden 13 ist beim oberen Ende des Boden-Wandungsteils 6 im Behälter angeordnet und mit Lager- sowie Schwenkmitteln 14 gelagert, um eine horizontale Schwenkachse verschwenkbar und in verschiedenen Schwenkstellungen fixierbar. Der Gut-Behälter 3 weist ferner einen in der oberen Hälfte des zylindrischen Wandungsteils 9 angeordneten, fest und dicht mit diesem verbundenen, inneren Behälterteil bzw. inneren Wandungsteil 17 auf, der als Trennwand dient.

Der innere Wandungsteil 17 hält mindestens ein Filter 19 und nämlich mehrere Filter 19, wobei zum Beispiel vier gemäss der Fig. 2 im Gut- und Wirbelschicht-Behälter 3 um die Behälterachse 4 herum verteilte, voneinander im Abstand stehende Filter 19 vorhanden sind. Jedes Filter 19 ist lösbar am inneren Wandungsteil 17 befestigt und ragt von diesem weg nach unten. Am Wandungsteil 17 ist für jedes Filter 19 eine in der Fig. 1 nur schematisch gezeichnete Gas-Reinigungsvorrichtung 20 mit einer Verschlussvorrichtung 21 und mit einem Reinigungsgas-Einlass 22 befestigt. Der innere Wandungsteil 17 hält ferner Nass-Reinigungsmittel zum Nass-Reinigen der Filter 19. Die Nass-Reinigungsmittel weisen mindestens eine Nass-Reinigungsvorrichtung bzw. Waschvorrichtung und nämlich vier erste Nass-Reinigungsvorrichtungen 23 sowie eine zweite, grössere Nass-Reinigungsvorrichtung 25 auf. Die Achsen der vier ersten Nass-Reinigungsvorrichtungen 23 stehen in grösserem Abstand von der Behälterachse 4 als die Filterachsen, bilden zusammen einen Kranz und sind in der in der Fig. 2 ersichtlichen zur Behälterachse sowie zu den Filterachsen parallelen Projektion derart um die Behälterachse 4 herum verteilt, dass sich jede erste Nass-Reinigungsvorrichtung ungefähr zwischen zwei einander benachbarten Filtern 19 befindet. Die zweite Nass-Reinigungsvorrichtung 25 befindet sich im Zentrum des innern Wandungsteils 17.

Die Wandungsteile 6, 7, 8, 9, 10 bilden zusammen die Aussenwand der Wandung 5 und schliessen einen Behälter-Innenraum 27 dicht gegen die Umgebung ab. Der Siebboden 13, der als Trennwand dienende, innere Wandungsteil 17 und die an diesem befestigten Filter 19 sowie Vorrichtungen 21, 23, 25 unterteilen den Innenraum 27 in drei Teile, nämlich von unten nach oben in einen Gasverteiler-Raum 28, einen Wirbel- und Rohgas-Raum 29 und einen Reingas-Raum 30.

Der Boden-Wandungsteil 6 ist mit einem Gaseinlass 33 und einem Gutauslass 34 versehen. Der letztere besitzt einen Durchgang und ein verstellbares Verschlusselement zum wahlweise Abschliessen oder Freigeben des Durchgangs. Mindestens eine Nass-Reinigungsvorrichtung bzw. Waschvorrichtung 35 besitzt eine unterhalb des Siebbodens 13 aussen am Boden-Wandungsteil 6 befestigte Halterung mit einem Gehäuse 36 und mindestens ein Sprühorgan 37 mit mindestens einer Sprühdüse bzw. Auslassöffnung. Mindestens eine oberhalb des Siebbodens angeordnete Nass-Reinigungsvorrichtung bzw. Waschvorrichtung 39 besitzt mindestens eine aussen am konischen Wandungsteil 8 befestigte Halterung mit einem Gehäuse 40 und mindestens ein Sprühorgan 41 mit mindestens einer Sprühdüse bzw. Auslassöffnung.

Ferner kann noch eine Sprühvorrichtung 43 mit mindestens einem im Wirbel- und Rohgas-Raum 29 angeordneten Sprühorgan 44 mit mindestens einer Sprühdüse zum Zersprühen eines Sprühmaterials mit einem Bindemittel oder Uberzugsmaterial oder dergleichen vorhanden sein. Das Sprühorgan 44 ist beispielsweise mit einer Halterung zwischen dem Siebboden 13 und der Nass-Reinigungsvorrichtung 39 am konischen Wandungsteil 8 befestigt und mit einer den letzteren durchdringenden Flüssigkeitsleitung verbunden. Die Wandung 5 ist mit mindestens einem Fenster versehen, wobei zum Beispiel an jedem der Wandungsteile 7, 8, 9 mindestens ein Fenster 45 bzw. 46 bzw. 47 angeordnet ist. Der zylindrische Wandungsteil 9 ist bei einer Umfangsstelle der oberen Fläche des inneren Wandungsteils 17 mit einem wahlweise freigebbaren oder absperrbaren Flüssigkeitsauslass 48 versehen und oberhalb des inneren Wandungsteils 17 mit einem Gasauslass 49 versehen.

Die Einrichtung 1 weist einen Nachentstauber 51 mit einem Nachentstauber-Behälter 53 auf. Dessen Wandung 55 ist im allgemeinen rotationssymmetrisch zu einer vertikalen Behälterachse 54 und besitzt mehrere lösbar miteinander verbundene Wandungsteile, nämlich einen im wesentlichen konischen, sich nach unten verjüngenden Boden-Wandungsteil 56, einen zylindrischen Wandungsteil 57 und einen Deck-Wandungsteil 58. Im Nachentstauber-Behälter 53 ist ein innerer Behälterteil- bzw. innerer Wandungsteil 61 befestigt, der eine Trennwand bildet. Am inneren Wandungsteil 61 sind Filter 63 lösbar befestigt, denen je eine Gas-Reinigungsvorrichtung 64 mit einer Verschlussvorrichtung 65 und einem Reinigungsgas-Einlass 66 zugeordnet ist. Ferner sind erste Nass-Reinigungsvorrichtungen bzw. Waschvorrichtungen 67 und eine zweite Nass-Reinigungsvorrichtung bzw. Waschvorrichtung 68 am inneren Wandungsteil 61 lösbar befestigt. Die Filter 63 und die Nass-Reinigungsvorrichtungen 67, 68 sind zum Beispiel gleich oder ähnlich über den inneren Wandungsteil 61 verteilt wie die Filter 19 und Nass-Reinigungsvorrichtungen 23, 25 über den inneren Wandungsteil 17.

Die Wandungsteile 56, 57, 58 bilden zusammen die Aussenwand der Wandung 55 und schliessen einen Innenraum 69 dicht gegen die Umgebung ab. Der als Trennwand dienende innere Wandungsteil 61 und die an diesem befestigten Filter 63 sowie Vorrichtungen 64, 67, 68 unterteilen den Innenraum 69 in einen Rohgas-Raum 70 und einen Reingas-Raum 71, wobei sich der Rohgas-Raum 70 unter und der Reingas-Raum 71 über dem inneren Wandungsteil 61 befindet. Der Behälter 53 hat einen in den Rohgas-Raum 70 mündenden Gaseinlass 73, einen am unteren Ende des Bodenteils 56 angeordneten, wahlweise verschliessbaren und freigebbaren Auslass 74, einen aus dem Reingas-Raum 71 herausführenden Gasauslass 75, mindestens ein Fenster 77 und einen bei einer Umfangsstelle der oberen Fläche des inneren Wandungsteils 61 angeordneten, wahlweise freigebbaren und absperrbaren Flüssigkeitsauslass 78.

Die Wandungen 5 und 55 der beiden Behälter 3 bzw. 53 bestehen im wesentlichen - d. h. abgesehen von zwischen den verschiedenen Wandungsteilen vorhandenen Dichtungen und den Fenstern und dergleichen - aus metallischen Materialien, nämlich aus rostfreiem Stahl. Jedes Fenster besitzt mindestens eine Glasscheibe.

Die Wirbelschicht-Einrichtung 1 besitzt noch Gasleitmittel 81 um ein Prozessgas, nämlich Luft, von unten nach oben durch die beiden Behälter 3, 53, hindurchzuleiten. Die Gasleitmittel 81 besitzen einen gegen die Umgebung der Behälter 3, 53 offenen Lufteinlass 83. Dieser ist über eine Gasleitung 84, eine Absperr- und/oder Regelvorrichtung 85, ein Staubfilter 86 und eine Gasaufbereitungsvorrichtung 87 mit dem Gaseinlass 33 des Gut-Behälters 3 verbunden. Die Gasaufbereitungsvorrichtung 87 weist zum Beispiel eine Heiz- und/oder Kühlvorrichtung und/oder eine Entfeuchtungsvorrichtung auf. Der Gasauslass 49 des Wirbelschicht-Behälters 3 ist über eine Gasleitung 89 mit dem Gaseinlass 73 des Nachentstauber-Behälters 53 verbunden. Der Gasauslass 75 des letzteren ist über eine Gasleitung 91 und eine Saugvorrichtung 92 mit einem in die Umgebung mündenden Luftauslass 93 verbunden.

Die Einrichtung 1 besitzt nur schematisch dargestellte Reinigungsgas-Zufuhrmittel 95 mit mindestens einer Druckgasquelle, die zum Beispiel ein Filter, einen Kompressor und einen Druckluftbehälter aufweist. Die Reinigungsgas-Zufuhrmittel 95 besitzen ferner mit der bzw. jeder Druckgasquelle verbundene Absperrvorrichtungen, beispielsweise in der Nähe des Behälters 3 angeordnete, elektrisch oder pneumatisch betätigbare Ventile, deren Ausgänge durch Gasleitungen, welche nur durch gestrichelte Pfeile angedeutet sind, mit den Reinigungsgas-Einlässen 22 und 66 verbunden sind.

Die Einrichtung weist ferner nur schematisch dargestellte Reinigungsflüssigkeit-Zufuhrmittel 96 auf. Diese besitzen zum Beispiel mindestens eine Pumpe, mindestens ein Flüssigkeitsreservoir sowie Absperrvorrichtungen, beispielsweise elektrisch oder pneumatisch betätigbare Ventile. Diese sind durch Flüssigkeitsleitungen, die durch gestrichelte Pfeile angedeutet sind, mit den in den beiden Behältern 3 und 53 angeordneten Nass-Reinigungsvorrichtungen 23, 25, 35, 39, 67 und 68 verbunden.

Jedes Filter 19, 63 ist im wesentlichen rotationssymmetrisch zu einer Filterachse und unverschiebbar am inneren Wandungsteil 17 bzw. 61 befestigt. Jedes Filter 19, 63 ist als im wesentlichen formfestes Patronenfilter ausgebildet und besitzt insbesondere einen ebenfalls im wesentlichen formfesten, gasdurchlässigen, zur Filterachse koaxialen, im wesentlichen zylindrischen, metallischen Mantel 121. Dieser umschliesst einen zum grössten Teil leeren Filter-Innenraum und weist mindestens zwei und beispielsweise drei miteinander versinterte Drahtgewebe mit unterschiedlichen Maschenweiten auf. Das äusserste und also die Aussenfläche des Mantels bildende Drahtgewebe hat die kleinste Maschenweite und dient als Filtrationselement, um Staub aus einem zu filtrierenden Gas an der Aussenfläche des Mantels abzuscheiden. Der Mantel ist faltenlos, so dass seine Aussenfläche im wesentlichen glatt ist.

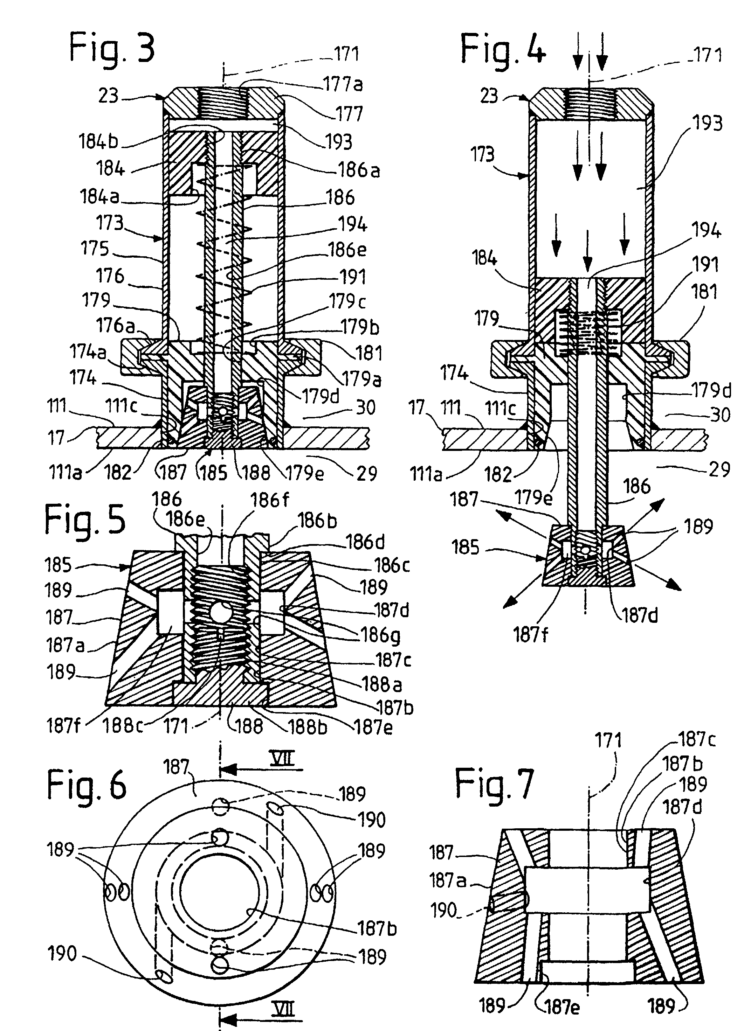

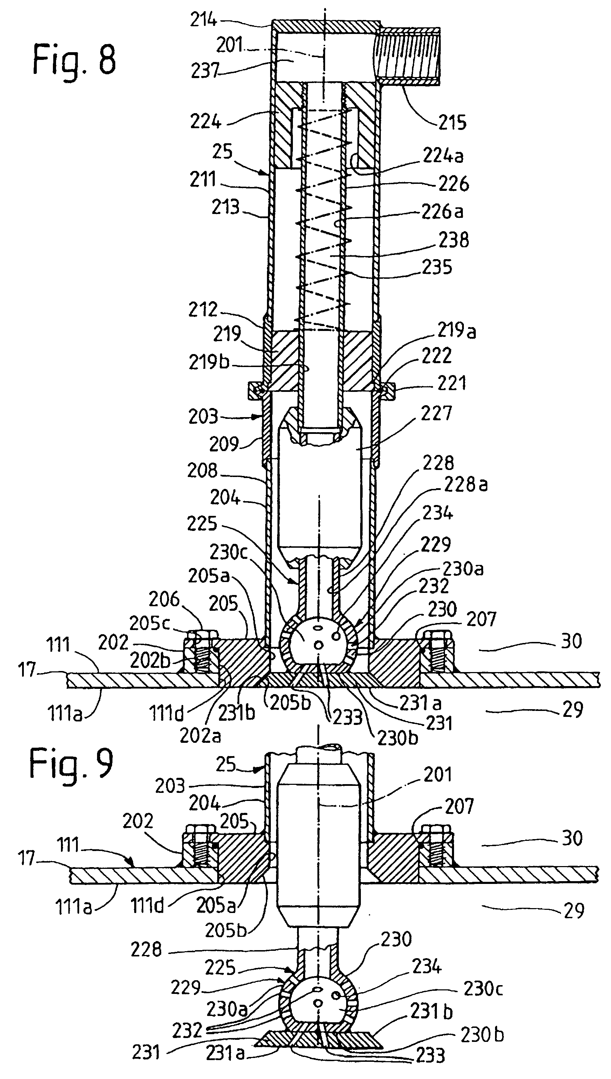

Der innere Wandungsteil 17 weist eine in den Figuren 3, 4, 8, 9 ersichtliche Platte 111 auf. Diese hat unten eine an den Rohgas-Raum 29 angrenzende Fläche 111a und ist für jede erste Nass-Reinigungsvorrichtung 23 mit einem in den Figuren 3, 4 ersichtlichen Loch 111c sowie für die zweite Nass-Reinigungsvorrichtung 25 mit einem in den Figuren 8, 9 ersichtlichen Loch 111d versehen. Die Löcher 111c, 111d bestehen aus durchgehenden Bohrungen und haben eine bei der Fläche 111a in den Rohgas-Raum 29 mündende Mündung.

Eine der ersten Nass-Reinigungsvorrichtungen bzw. Waschvorrichtungen 23 ist separat in den Figuren 3, 4 ersichtlich. Jede erste Nass-Reinigungsvorrichtung 23 ist im wesentlichen rotationssymmetrisch zu einer Achse 171, die auch die Achse des der betreffenden Reinigungsvorrichtung 23 zugeordneten Lochs 111c bildet. Jede Reinigungsvorrichtung 23 weist ein Gehäuse 173 auf. Dieses ist am Wandungsteil 17 befestigt und ragt auf die dem Rohgas-Raum 29 abgewandte Seite von diesem weg und deckt das Loch 111c dicht gegen den freien Bereich des Reingas-Raums 30 ab. Das Gehäuse 173 besitzt einen ringförmigen, metallischen, unteren Gehäuseteil 174, der in einem der Löcher 111c der Platte 111 des Wandungsteils 17 steckt, unten bündig mit der Fläche 111a der Platte 111 ist, oben aus der letzteren herausragt und dicht an der Platte 111 befestigt, beispielsweise angeschweisst ist. Der Gehäuseteil 174 ist zum grössten Teil hohlzylindrisch und hat an seinem oberen Ende einen nach aussen ragenden Kragen 174a. Das Gehäuse 173 weist noch einen oberen Gehäuseteil 175 auf. Dieser besitzt eine Hülse 176 mit einem zylindrischen Mantel und einem an dessen unterem Ende nach aussen ragenden Kragen 176a. Die metallische Hülse 176 ist am oberen Ende durch ein dicht mit ihr verbundenes, metallisches, zum Beispiel mit ihr verschweisstes Endelement 177 abgeschlossen. Dieses besitzt eine durchgehende Gewindebohrung, die als Flüssigkeits-Einlass 177a dient und lösbar mit einer in den Figuren 3, 4 nicht gezeichneten Leitung der Reinigungsflüssigkeits-Zufuhrmittel 96 verbunden ist.

Ein einstückiger, aus formfestem Kunststoff bestehender Führungskörper 179 ist im Gehäuse 173 angeordnet und erstreckt sich vom unteren Ende des unteren Gehäuseteils 174 bis in den unteren Endabschnitt des oberen Gehäuseteils 175. Der Führungskörper 179 hat eine satt in die zylindrischen Innenflächen des Unterteils 174 und der Hülse 176 hineinpassende, zylindrische Aussenfläche und einen von dieser weg nach aussen zwischen die beiden Krägen 174a, 176a hineinragenden Bund 179a. Der Führungskörper 179 ist mit einem zur Achse 171 koaxialen, durchgehenden Loch 179b versehen. Dieses hat einen zylindrischen Lochabschnitt 179c und unterhalb von diesem eine Erweiterung 179d mit einem zylindrischen Lochabschnitt und einem sich von diesem weg nach unten erweiternden, konischen Lochabschnitt 179e. Der Führungskörper 179 hat an seinem unteren Ende eine ringförmige, radiale, ebene Stirn- bzw. Endfläche, die mit der am unteren Ende des unteren Gehäuseteils 174 vorhandenen Stirn- bzw. Endfläche und der Fläche 111a der Platte 111 mindestens annähernd und vorzugsweise genau bündig ist. Ein aus einer mehrteiligen Klammer oder Bride bestehendes Verbindungselement 181 umschliesst die beiden Krägen 174a, 176a und verbindet die beiden Gehäuseteile 174, 175 derart lösbar miteinander, dass der Bund 179a zwischen den beiden Krägen festgeklemmt wird und die beiden Gehäuseteile 174, 175 gegeneinander abdichtet. Eine Dichtung 182 ist in einer Ringnut der Aussenfläche des Führungskörpers 179 angeordnet und dichtet diesen in der Nähe seines unteren Endes gegen den unteren Gehäuseteil 174 ab.

Ein aus Kunststoff bestehender, zylindrischer Kolben 184 ist verschiebbar in der Hülse 176 geführt. Der Kolben 184 hat ein zur Achse 171 koaxiales, durchgehendes Loch 184a. Dieses besitzt einen Abschnitt mit einem Innengewinde 184b.

Ein mehrteiliges, zum Teil auch in der Fig. 5 ersichtliches Sprühorgan 185 besitzt eine zur Achse 171 koaxiale, metallische Stange 186. Diese hat am oberen Ende ein mit dem Innengewinde 184b verschraubtes Aussengewinde 186a. Die Stange 186 hat ferner einen zylindrischen Abschnitt 186b, der mit kleinem radialem Spiel verschiebbar im Lochabschnitt 179c des Führungskörpers 179 geführt ist. Der dem Kolben 184 abgewandte, aus dem zylindrischen Lochabschnitt 179c des Führungskörpers 179 herausragende, kurze, zylindrische, besonders deutlich in der Fig. 5 ersichtliche Endabschnitt 186c, der Stange 186 hat einen Durchmesser der etwas kleiner als der Durchmesser des Abschnitts 186b ist. Zwischen den beiden zylindrischen Abschnitten 186b, 186c ist eine radiale Schulterfläche 186d vorhanden. Die Stange 186 ist hohl und hat ein zur Achse 171 koaxiales, durchgehendes Loch 186e, das an seinem dem Kolben 184 abgewandten Ende mit einem Innengewinde 186f versehen ist. Ferner ist der Endabschnitt 186c der Stange 186 mit mindestens einem radialen, in das axiale Loch 186e mündenden Loch 186g und nämlich mit mehreren um die Achse 171 herum verteilten Löchern 186g versehen.

Das Sprühorgan 185 weist ferner einen aus Kunststoff bestehenden, noch separat in den Figuren 6 und 7 gezeichneten Sprühkopf 187 mit einer Aussenfläche 187a auf. Diese weist eine konische, sich nach unten erweiternde Mantelfläche auf. Die letztere bildet mit der Achse 171 den gleichen Winkel wie der konische Abschnitt 179e des Lochs 179b des Führungskörpers 179 und hat an ihrem unteren Ende mindestens annähernd den gleichen Durchmesser wie der konische Lochabschnitt 179e. Der Sprühkopf ist an seinem unteren und oberen Ende je durch eine ebene, radiale Stirn- bzw. Endfläche begrenzt. Der Sprühkopf 187 weist ein durchgehendes, zur Achse 171 koaxiales Loch 187b auf. Dieses hat einen zylindrischen Abschnitt 187c, der durch eine Erweiterung 187d in zwei Teile unterteilt ist, und am unteren Ende eine Erweiterung 187e.

Der Sprühkopf 187 sitzt mit kleinem radialem Spiel um die Achse 171 drehbar auf dem Endabschnitt 186c der Stange 186 und ist mit einem Befestigungselement 188 lösbar mit der Stange 186 verbunden. Das Befestigungselement 188 besteht aus einer Schraube und hat einen mit dem Innengewinde 186f des Sprühkopfs 187 verschraubten Gewindeteil 188a sowie einen in der Erweiterung 187e des Lochs 187b des Sprühkopfs 187 sitzenden Kopf 188b. Der Gewindeteil 188a hat an seinem dem Kopf 188b abgewandten Ende einen Schlitz 188c, so dass das Befestigungselement 188 mit einem vom oberen Ende der Stange 186 her in deren Loch 186e eingeführten Schraubenzieher in der Stange 186 festgeschraubt werden kann. Der Kopf 188b liegt auf seiner mit dem Gewindeteil 188a zusammenhängenden Seite mit einer ebenen, radialen Ringfläche an der Endfläche der Stange 186 an und hält den Sprühkopf 187 zusammen mit der Schulterfläche 186d mit höchstens kleinem axialen Spiel auf der Stange. Der Kopf 188b hat auf seiner dem Gewindeteil 188a abgewandten Seite eine vollständig ebene Stirn- bzw. Endfläche, die weder einen Schlitz noch ein Loch oder dergleichen aufweist und bündig mit der unteren Stirn- bzw. Endfläche des Sprühkopfs 187 ist. Der die Stange 186 umschliessende, freie Bereich der Erweiterung 187d bildet einen ringförmigen Hohlraum 187f des Sprühkopfs 187. Der Sprühkopf 187 hat mindestens ein sich vom Hohlraum 187f in die Aussenfläche 187a erstreckendes Flüssigkeits-Auslassloch und vorzugsweise mehrere mit 189 und 190 bezeichnete Flüssigkeits-Auslasslöcher. Diese sind gerade und verlaufen in verschiedenen Richtungen vom freien Bereich der Erweiterung 187d weg zur Aussenfläche 187a. Die Achsen der Auslasslöcher 189 kreuzen die Achse 171 und bilden verschiedene Winkel mit dieser. Die Auslasslöcher 189 sind ferner gruppenweise um die Achse 171 herum gegeneinander versetzt. Es sind zum Beispiel zwei in die obere Stirn- bzw. Endfläche mündende Auslasslöcher 189, vier in die konische Mantelfläche mündende Auslasslöcher 189 und zwei in die untere Stirn- bzw. Endfläche mündende Auslasslöcher 189 vorhanden. Die Auslasslöcher weisen ferner mindestens ein zur Achse 171 windschiefes Auslassloch 190 auf, wobei zum Beispiel zwei solche Auslasslöcher 190 vorhanden sind und in der konischen Mantelfläche liegende, um die Achse 171 herum um 180° gegeneinander versetzte Auslassmündungen haben. Jedes Auslassloch 190 hat also eine die Achse 171 nicht kreuzende Achse und bildet mit der Achse 171 - in einer Projektion auf eine zur Achse 171 und zu seiner eigenen Achse parallele Ebene - vorzugsweise einen mindestens 70° bis höchstens 110° betragenden Winkel. Das eine Auslassloch 190 ist zum Beispiel gegen eine zur Achse 171 rechtwinklige Ebene von der Erweiterung 187d weg 5° bis 10° nach oben geneigt, während das andere Auslassloch 190 von der Erweiterung 187d weg 5° bis 10° nach unten geneigt ist.

Eine Feder 191 ist zwischen dem Führungskörper 179 sowie dem Kolben 184 angeordnet, umschliesst die Stange 186 und ragt mit ihren Enden in einander zugewandte Erweiterungen der Löcher 179b und 184a des Führungskörpers 179 bzw. Kolben 184 hinein. Die Feder 191 übt eine vom Rohgas-Raum 29 weg nach oben gerichtete Kraft auf den Kolben 184 sowie das mit diesem verbundene Sprühorgan 185 aus und ist bestrebt, das letztere in dessen in der Fig. 9 gezeichnete Ruhe-Stellung zu drücken. Der Sprühkopf 187 des Sprühorgans 185 liegt in der Ruhe-Stellung des letzteren mit seiner konischen Mantelfläche am konischen Lochabschnitt 179e des Führungskörpers 179 an. Der Sprühkopf 187 ist dann bei seinem unteren Ende mindestens ungefähr und vorzugsweise genau bündig mit den unteren Enden des Führungskörpers 179 sowie des Gehäuses 173 und mit der unteren Fläche 111a der Platte 111.

Der Kolben 184 liegt mindestens annähernd flüssigkeitsdicht an der Innenfläche der Hülse 176 an und ist mindestens annähernd flüssigkeitsdicht mit der Stange 186 verbunden. Ferner bildet der Lochabschnitt 179c des Führungskörpers 179 eine mindestens annähernd und beispielsweise vollkommen flüssigkeitsdichte Durchführung für die Stange 186. Das Befestigungselement 188 schliesst das zur Achse 171 koaxiale Loch 186e der Stange 186 am unteren Ende von dieser mindestens einigermassen dicht ab. Ferner liegt die konische Mantelfläche des Sprühkopfs 187 in der Ruhe-Stellung des letzteren mindestens annähernd dicht am konischen Abschnitt 179e des Lochs 179b des Führungskörpers 179 an.

Der Flüssigkeits-Einlass 177a mündet in einen im Gehäuse 173 zwischen dem Endelement 177 und dem Kolben 184 vorhandenen Hohlraum 193. Das zur Achse 171 koaxiale Loch 186e sowie die radialen Löcher 186g der Stange 186 bilden zusammen einen Durchgang 194, der den Hohlraum 193 durch den Kolben 184 hindurch mit dem ringförmigen Hohlraum 187f und über diesen mit den Flüssigkeits-Auslasslöchern 189, 190 verbindet.

Die zweite Nass-Reinigungsvorrichtung bzw. Waschvorrichtung 25 ist separat in der Fig. 8 und teilweise in der Fig. 9 ersichtlich. Die zweite Nass-Reinigungsvorrichtung 25 ist im wesentlichen rotationssymmetrisch zu einer Achse 201, die auch die Achse des der betreffenden Vorrichtung 25 zugeordneten Lochs 111d der Platte 111 des Wandungsteils 17 bildet. Der Wandungsteil 17 besitzt bei jedem Loch 111d der Platte 111 einen an der oberen Seite der Platte 111 dicht befestigten, nämlich angeschweissten Verstärkungsring 202. Dieser hat ein mit dem Loch 111d fluchtendes, zylindrisches Loch 202a und einige entlang seinem Umfang verteilte Gewindebohrungen 202b.

Die zweite Nass-Reinigungsvorrichtung 25 hat ein Gehäuse 203, das lösbar und dicht am Wandungsteil 17 befestigt ist und auf die dem Rohgas-Raum 29 abgewandte Seite von diesem wegragt. Das Gehäuse 203 hat einen unteren Gehäuseteil 204. Dieser besitzt an seinem unteren Ende einen Ringflansch 205, der durch das Loch 202a des Verstärkungsrings 202 hindurch in das Loch 111d der Platte 111 hineinragt und unten eine ebene Stirn- bzw. Endfläche hat, die mindestens annähernd und vorzugsweise genau bündig mit der Fläche 111a der Platte 111 ist. Der Ringflansch 205 besitzt ein zur Achse 201 koaxiales Loch 205a, das oben einen zylindrischen Abschnitt und einen sich von diesem weg erweiternden, in die untere Endfläche mündenden, konischen Lochabschnitt 205b hat. Der Ringflansch 205 besitzt ferner entlang seinem Umfang verteilte Bohrungen 205c und ist mit Schrauben 206 lösbar am Verstärkungsring 202 befestigt sowie mit einer Dichtung 207 gegen diesen abgedichtet. Der untere Gehäuseteil 204 besitzt noch zwei im allgemeinen zylindrische Hülsen 208 und 209, von denen die untere Hülse 208 fest sowie dicht mit dem Ringflansch 205 und mit der oberen Hülse 209 verbunden, zum Beispiel verschweisst ist.

Das Gehäuse 203 besitzt einen oberen Gehäuseteil 211 mit zwei miteinander fluchtenden Hülsen 212, 213, von denen die obere Hülse 213 am oberen Ende durch ein Endelement 214 abgeschlossen ist. Die obere Hülse 213 ist in der Nähe ihres oberen Endes mit einem Flüssigkeits-Einlass 215 versehen, der durch einen radial von der oberen Hülse wegragenden Stutzen mit einem Innengewinde gebildet und mit einer in der Fig. 8 nicht gezeichneten Leitung der Reinigungsflüssigkeits-Zufuhrmittel 96 verbunden ist. Die beiden Hülsen 212, 213, das Endelement 214 und der Einlass 215 sind fest sowie dicht miteinander verbunden, nämlich verschweisst.

Ein Führungskörper 219 aus Kunststoff hat eine im allgemeinen zylindrische Aussenfläche, sitzt im zur Achse 201 koaxialen Loch der unteren Hülse 212 des oberen Gehäuseteils 211 und hat am unteren Ende einen Bund 219a, der in eine Erweiterung des genannten Lochs der Hülse 212 hineinragt. Der Führungskörper 219 hat ferner ein zur Achse 201 koaxiales, durchgehendes, zylindrisches Loch 219b. Die Hülsen 209 und 212 haben an ihren einander zugewandten Enden nach aussen ragende, aneinander anliegende Krägen. Ein diese umschliessendes Verbindungselement 221 verbindet die Hülsen 209 sowie 212 und damit die beiden Gehäuseteile 204, 211 lösbar miteinander, wodurch auch der Bund 219a des Führungskörpers zwischen den beiden Hülsen 209, 212 festgeklemmt wird. Eine Dichtung 222 dichtet die beiden Hülsen 209, 212 gegeneinander ab. Ein zylindrischer, aus Kunststoff bestehender Kolben 224 ist verschiebbar im oberen Gehäuseteil 211 geführt und hat ein zur Achse 201 koaxiales, durchgehendes Loch 224a, das einen Abschnitt mit einem Innengewinde und unterhalb von diesem eine Erweiterung hat.

Die zweite Nass-Reinigungsvorrichtung 25 besitzt ein Sprühorgan 225 mit einer zur Achse 201 koaxialen, im wesentlichen zylindrischen, hohlen Stange 226. Diese ist am oberen Ende mit einem Aussengewinde versehen, in das Innengewinde des Lochs 224a des Kolbens 224 eingeschraubt und dadurch lösbar sowie flüssigkeitsdicht mit diesem verbunden. Die Stange 226 durchdringt das Loch 219b des Führungskörpers 219, ist diesem verschiebbar geführt und besitzt ein durchgehendes, axiales Loch 226a. Am unteren Ende der Stange 226 ist ein Verbindungsund Lagerelement 227 befestigt. In diesem ist eine Stange 228 um die Achse 201 drehbar gelagert, die unten aus dem Verbindungs- und Lagerelement 227 herausragt und ein durchgehendes axiales Loch 228a hat. Der Sprühkopf 229 des Sprühorgans 225 weist einen fest und dicht mit dem unteren Ende der Stange 228 verbundenen Hohlkörper 230 auf. Dessen Aussenfläche 230a ist zum grössten Teil ungefähr kugelförmig, hat jedoch auf der dem Kolben 224 abgewandten Seite einen ebenen, zur Achse 201 rechtwinkligen, horizontalen Flächenabschnitt 230b. Der Hohlkörper 230 umschliesst einen Hohlraum 230c. Der Sprühkopf 229 weist ferner ein zur Achse 201 koaxiales und im wesentlichen rotationssymmetrisches, ebenes Plättchen 231 auf, das mit einer ebenen Fläche am ebenen Flächenabschnitt 230b des Hohlkörpers 230 anliegt. Das Plättchen 231 hat eine dem Hohlkörper abgewandte, ebene Fläche 231a, welche die Stirnfläche des ganzen Sprühorgans 225 bildet, und eine konische Randfläche 231b. Diese bildet mit der Achse 201 den gleichen Winkel wie der konische Lochabschnitt 205b. Der Sprühkopf 229 besitzt einige gerade Flüssigkeits-Auslasslöcher 232, 233 und 234. Die Achsen der Auslasslöcher 232 und 233 kreuzen die Achse 201 und bilden mit dieser verschiedene Winkel. Die Auslasslöcher 232 verlaufen vom Hohlraum 230c zum kugelförmigen Abschnitt der Aussenfläche 230a. Die zwei Auslasslöcher 232 erstrecken sich vom Hohlraum 230c zum ebenen Flächenabschnitt 230b und durch das Plättchen 231 hindurch zu dessen Fläche 231a. Das bzw. jedes Auslassloch 234 ist windschief zur Achse 201, wobei vorzugsweise mindestens zwei um die Achse 201 herum gegeneinander versetzte, windschiefe Auslasslöcher 234 vorhanden sind.

Eine zwischen dem Führungskörper 219 und dem Kolben 224 angeordnete Feder 235 übt eine vom Rohgas-Raum 29 weg nach oben gerichtete Kraft auf den Kolben 224 und das mit diesem verbundene Sprühorgan 225 aus und ist bestrebt, das letztere in der in der Fig. 8 gezeichneten Ruhe-Stellung zu halten. Der Einlass 215 mündet in einen im Gehäuse 203 zwischen dem Endelement 214 und dem Kolben 224 vorhandenen Hohlraum 237. Dieser ist durch einen durch den Kolben 224, durch die Stangen 226, 228 sowie durch das Verbindungs- und Lagerelement 227 verlaufenden Durchgang 238 mit dem Hohlraum 230c und über diesen mit den Auslasslöchern 232, 233, 234 des Sprühkopfs 229 verbunden.

Das in das Loch 111d der Platte 111 hineinragende Gehäuse 203 deckt dieses Loch 111d dicht gegen den freien Bereich des Reingas-Raums 30 ab. Wenn sich das Sprühorgan 225 in der in der Fig. 8 gezeichneten Ruhe-Stellung befindet, schliesst das Plättchen 231 des Sprühkopfs 229 den konischen Lochabschnitt 205b des Lochs 205a des Ringflanschs 205 und damit den Innenraum des Gehäuses 203 mehr oder weniger dicht gegen den Rohgas-Raum 29 ab. Dabei bleibt allerdings der Hohlraum 230c des Sprühkopfs 229 noch durch die Flüssigkeits-Auslasslöcher 233 mit dem Rohgas-Raum 29 verbunden. Die die Stirnfläche des Sprühkopfs 229 und des ganzen Sprühorgans 225 bildende Fläche 231a des Plättchens 231 ist in der Ruhe-Stellung des Sprühorgans 225 mindestens annähernd und vorzugsweise genau bündig mit der unteren Stirn- bzw. Endfläche des Ringflansches 205 des Gehäuses 202 und mit der an den Rohgas-Raum 29 angrenzenden Fläche 111a der Platte 111.

Die zweite Nass-Reinigungsvorrichtung 25 hat grössere Aussenabmessungen als die ersten Nass-Reinigungsvorrichtungen 23. Der Durchmesser des Hohlkörpers 230 der zweiten Nass-Reinigungsvorrichtung 25 ist zum Beispiel mindestens oder ungefähr 50% grösser als der Durchmesser des Sprühkopfs 187 der ersten Nass-Reinigungsvorrichtungen. Wenn die Reinigungsflüssigkeits-Zufuhrmittel 96 den Nass-Reinigungsvorrichtungen 23, 25 bei der noch näher beschriebenen Reinigung eine den gleichen Druck aufweisende Reinigungsflüssigkeit zuführen, ist die Sprührate der zweiten Nass-Reinigungsvorrichtung 25 wesentlich grösser - zum Beispiel etwa zwei bis fünf Mal grösser - als die Sprührate einer ersten Nass-Reinigungsvorrichtung 23.

Die Gehäuse 36, 40 der Nass-Reinigungsvorrichtungen 35 bzw. 39 sind im wesentlichen ausserhalb der Wandung 5 angeordnet und enthalten einen dicht gegen die Umgebung abgeschlossenen Gehäuse-Innenraum. Die Sprühorgane 37 und 41 sind ungefähr horizontal verschiebbar in den Gehäusen 36 bzw. 40 geführt und können wahlweise in eine Ruhe-Stellung oder in eine Reinigungs-Stellung gebracht werden. In der Ruhe-Stellung befinden sie sich im wesentlichen ausserhalb des BehälterInnenraums 27 in den Gehäusen 36 bzw. 40. Die Innenräume der letzteren sind dann beispielsweise durch die Sprühorgane 37 und 41 und/oder durch zusätzliche Verschlusselemente ungefähr bündig mit der Innenfläche der Wandung 5 gegen den Behälter-Innenraum 27 abgeschlossen. In der Reinigungs-Stellung befindet sich jedes Sprühorgan 37 und 41 mindestens teilweise im Gasverteiler-Raum 28 bzw. im Wirbel- und Rohgas-Raum 29.

Die Gehäuse 36, 40 haben einen Flüssigkeits-Einlass für eine Reinigungsflüssigkeit. Jede Nass-Reinigungsvorrichtung 35, 39 ist zum Beispiel ferner ähnlich wie die Nass-Reinigungsvorrichtungen 23, 25 mit einer Feder versehen und derart ausgebildet, dass das Sprühorgan 37 bzw. 41 ausgehend von seiner Ruhe-Stellung beim Zuführen einer unter Druck stehenden Reinigungsflüssigkeit entgegen der von der Feder erzeugten Rückstellkraft in die Reinigungs-Stellung verschoben wird. Das Sprühorgan 35 bzw. 47 bleibt dann in der Reinigungs-Stellung bis die Zufuhr von Reinigungsflüssigkeit beendet und das Sprühorgan durch die Feder in die Ruhe-Stellung zurückverschoben wird.

Die Sprühdüsen bzw. Auslassöffnungen der Sprühorgane 37 und 41 befinden sich in der Reinigungs-Stellung der letzteren zum Beispiel ungefähr bei der Behälterachse 4. Die Sprühorgane 37, 41 können die ihnen zugeführte Reinigungsflüssigkeit beispielsweise in einen Raum sprühen, der sich über einen ziemlich grossen Raumwinkel erstreckt. Die bzw. eine Sprühdüse bzw. Auslassöffnung des unteren Sprühorgans 37 ist nach oben gerichtet. Die bzw. mindestens eine Sprühdüse bzw. Auslassöffnung des oberen Sprühorgans 41 ist nach unten gerichtet.

Die Nass-Reinigungsvorrichtungen 67, 68 des Nachentstaubers 51 sind beispielsweise gleich oder ähnlich ausgebildet wie die im Gut-Behälter 3 angeordneten Nass-Reinigungsvorrichtungen 23, 25.

Die inneren Wandungsteile 17 und 61 sind in der Fig. 1 zur Vereinfachung eben und horizontal gezeichnet, sind jedoch in Wirklichkeit vorzugsweise zur Mitte hin mindestens stellenweise leicht nach oben gewölbt und ferner im allgemeinen ein wenig geneigt, so dass die von den Rändern der inneren Wandungsteile definierten Ebenen mit horizontalen Ebenen einen zum Beispiel ungefähr 2° oder eventuell bis etwa 5° betragenden Winkel bilden und sich die tiefsten Stellen der oberen Flächen der inneren Wandungsteile 17, 61 beim Flüssigkeitsauslass 48 bzw. 78 befinden. Die den Hauptbestandteil des inneren Wandungsteils 17 bildende Platte 111 und die entsprechende Platte des inneren Wandungsteils 61 sind dementsprechend ebenfalls mindestens stellenweise leicht gewölbt und im allgemeinen ein wenig geneigt. Die Filterachsen der Filter 19, 63 sind vorzugsweise trotzdem alle vertikal und parallel zu den Behälterachsen 4 bzw. 54. Die Achsen 171 und 201 der Nass-Reinigungsvorrichtungen 23 bzw. 25 sind senkrecht zu dem die jeweilige Nass-Reinigungsvorrichtung tragenden Abschnitt der Platte 111. Der Krümmungsradius der mindestens stellenweise gewölbten Platte 111 ist zudem so gross, dass jeder sich bei der Fläche 111a befindende Rand eines Lochs 111c, 111d noch mindestens annähernd in einer Ebene liegt und mindestens annähernd eine solche definiert. Die in den Ruhe-Stellungen der Sprühorgane 185, 225 dem Rohgas-Raum 29 zugewandten und an diesen angrenzenden, ebenen Flächen der Sprühorgane liegen dann mindestens annähernd in den von den Rändern der Löcher 111c, 111d definierten Ebenen. Die an den Reingas-Raum 30, 71 angrenzenden, sich auf der oberen Seite von Teilen der Gas- und Nass-Reinigungsvorrichtungen befindenden Flächen sind zum Beispiel mindestens teilweise nach aussen ein wenig, zum Beispiel ungefähr 2°, konisch nach unten geneigt. Möglicherweise bei einer Nass-Reinigung durch die Mäntel der Filter hindurch auf die letztgenannten Flächen und die oberen Flächen der inneren Wandungsteile 17, 61 gelangende Reinigungsflüssigkeit kann dann schnell durch die Flüssigkeitsauslässe 48, 78 abgeleitet werden.

Nun wird der Betrieb der Wirbelschicht-Einrichtung 1 beschrieben. Bei der Betriebsaufnahme wird zuerst eine Charge des etwa zur Bildung eines Arzneimittels dienenden, teilchenförmigen Gutes 99 - beispielsweise durch einen nicht gezeichneten, verschliessbaren Guteinlass hindurch - in den Wirbel- und Rohgas-Raum 29 eingebracht.

Beim nachfolgend zuerst beschriebenen "normalen" Betrieb der Einrichtung zum Behandeln des teilchenförmigen Gutes 99 befindet sich der Siebboden 13 in der in der Fig. 1 gezeichneten normalen, horizontalen Betriebs-Stellung. Des weitern befinden sich die Sprühorgane 37, 41, 185, 225 der Nass-Reinigungsvorrichtungen 23, 25, 35, 39 in den Ruhe-Stellungen ausserhalb des Rohgas-Raumes 29. Die Nass-Reinigungsvorrichtungen 67, 68 des Nachentstaubers 51 befinden sich in analogen Zuständen. Der Gutauslass 34 des Wirbelschicht-Behälters 3 und der Auslass 74 des Nachentstaubers 51 sind geschlossen.

Nach dem Einbringen des teilchenförmigen Gutes 99 in den Behälter 3 wird mit den Gasleitmitteln 81 Prozessgas durch den Gut- und Wirbelschicht-Behälter 3 sowie den Nachentstauber-Behälter 53 hindurch geleitet. Dabei wird mit der Saugvorrichtung 92 als Prozessgas dienende Luft aus der Umgebung in der Lufteinlass 83 der Gasleitung eingesaugt, mit dem Staubfilter 86 filtriert und mit der Gasaufbereitungsvorrichtung 87 aufbereitet. Die Luft strömt dann durch den Gaseinlass 33 in den Gasverteiler-Raum 28 des Behälters 3 und in diesem durch den Siebboden 13 sowie den Wirbel- und Rohgas-Raum 29 nach oben, wobei sie das teilchenförmige Gut 99 verwirbelt. Dieses bildet dann eine Wirbelschicht und wird behandelt. Dabei wird zum Beispiel zuerst während eines Teils der Verwirbelungsdauer mit der Sprühvorrichtung 44 eine Flüssigkeit auf die Teilchen des Gutes aufgesprüht, um diese zu grösseren Teilchen zu agglomerieren und/oder mit Uberzügen zu versehen. Anschliessend wird das Gut 99 ohne Besprühung weiter verwirbelt sowie getrocknet. Das Gut kann jedoch auch ohne vorherige Besprühung lediglich getrocknet werden.

Die das Prozessgas bildende, von der Wirbelschicht nach oben zu den Filtern 19 strömende Luft enthält normalerweise Staub, beispielsweise Abriebmaterial vom teilchenförmigen Gut und eventuell auch Partikel von Feststoffen, die in der zersprühten Flüssigkeit gelöst oder dispergiert waren. Die Luft strömt dann durch die Mäntel der Filter 19 hindurch in die Filter-Innenräume.

Beim normalen Betrieb von Filtern werden die Verschlussvorrichtungen 21 durch die von der Saugvorrichtung 93 durch den Behälter 3 hindurch gesaugte Luft in einen Zustand gebracht, in dem die Luft von den Filter-Innenräumen der verschiedenen Filter 19 durch Durchgänge der Verschlussvorrichtungen 21 in den für alle Filter 19 gemeinsamen Reingas-Raum 30 und von diesem durch die Gasleitung 89 in den Rohgas-Raum 70 des Nachentstaubers 51 strömen kann. Danach strömt die Luft durch die Mäntel der Filter 63 in die in diesen vorhandenen Filter-Innenräume, von diesen in den Reingas-Raum 71 des Nachentstaubers und aus diesem über die Saugvorrichtung 92 in die Umgebung. Die Luft wird beim Durchströmen der Mäntel der Filter 19, 63 filtriert, wobei der in ihr enthaltene Staub bei den sich aussen an den Mänteln befindenden Filtrationselementen abgeschieden wird.

Der von den Filtern 19 und 63 aus der Luft abgeschiedene und an den Aussenflächen der Mäntel 121 der Filter anhaftende Staub reduziert die Durchlässigkeit der Filter. Die Filter 19, 63 werden daher während der Verwirbelung des Gutes 99 abwechselnd einzeln oder gruppenweise mit Reinigungsgas gereinigt. Für eine derartige Reinigung führen die Reinigungsgas-Zufuhrmittel 95 dem Reinigungsgas-Einlass 22, 66 des bzw. jedes zu reinigenden Filters Reinigungsgas zu. Die Zufuhrmittel 95 können beispielsweise eine Folge von Reinigungsgas-Impulsen erzeugen und den verschiedenen Filtern zyklisch abwechselnd einen Reinigungsgas-Impuls zuführen. Das Reinigungsgas besteht zum Beispiel aus Luft, die aus der Umgebung angesaugt, filtriert und vom Kompressor der Zufuhrmittel 95 komprimiert wurde, so dass der Druck grösser als der Umgebungsluftdruck und als der normalerweise ein wenig unter dem Umgebungsluftdruck liegende Druck in den Rohgas-Räumen 29 bzw. 70 ist. Wenn die Reinigungsgas-Zufuhrmittel 95 einem Reinigungsgas-Einlass 22 und/oder 66 einer Gas-Reinigungsvorrichtung 21 bzw. 64 als Reinigungsgas dienende Druckluft zuführen, bringt diese die Verschlussvorrichtung 21 bzw. 65 der betreffenden Gas-Reinigungsvorrichtung in einen Zustand, in dem die Verschlussvorrichtung den Filter-Innenraum des zugeordneten Filters gegen den Reingas-Raum 30 bzw. 71 abschliesst. Während der Zufuhr von Reinigungsgas zu einem Filter strömt daher kein oder mindestens praktisch kein Prozessgas aus dem Rohgas-Raum in das betreffende Filter hinein. Die als Reinigungsgas zugeführte Druckluft strömt dann durch einen Durchgang der Verschlussvorrichtung hindurch in den Filter-Innenraum und durch den gasdurchlässigen Mantel des betreffenden Filters in den Rohgas-Raum 29 bzw. 70. Dabei bläst die als Reinigungsgas dienende Druckluft den aussen am Mantel des Filters haftenden Staub praktisch vollständig vom Filter weg in den Rohgas-Raum. Diejenigen Filter 19, denen keine als Reinigungsgas dienende Druckluft zugeführt wird, filtrieren während der Reinigung eines Filters Prozessgas.

Die Sprühorgane 185 und 225 der Nass-Reinigungsvorrichtung 23 und 25 befinden sich beim normalen Betrieb der Einrichtung 1 - wie schon erwähnt - in der in den Figuren 3 und 8 gezeichneten Ruhe-Stellung, in der die an den Rohgas-Raum 29 angrenzenden Teile der Reinigungsvorrichtungen 23 und 25 mindestens ungefähr bündig mit der Fläche 111a der Platte 111 sind. Die Gehäuse 173 und 203, der Führungskörper 179 und die verschiebbaren Sprühorgane 185, 225 der Nass-Reinigungsvorrichtungen 23 bzw. 25 schliessen dann zusammen die Löcher 111c und 111d der Platte 111 derart ab, dass der Wandungsteil 17 zusammen mit den Nass-Reinigungsvorrichtungen 23, 25 eine an den Rohgas-Raum 29 angrenzende, im wesentlichen leicht konkave und/oder ebene sowie im wesentlichen glatte und abgesehen von den Reinigungsflüssigkeits-Auslasslöchern 233 lochfreie Fläche bildet. Die Nass-Reinigungsvorrichtungen 23 und 25 bilden daher beim normalen Betrieb der Wirbelschicht-Einrichtung 1 keine sich im Rohgas-Raum 29 befindenden oder an diesen angrenzenden Ecken, Nischen und Kehlen und sonstige Toträume, in denen sich Staub und andere Verunreinigungsmaterialien ablagern können. Analoges gilt für die Nass-Reinigungsvorrichtungen 35 und 39. Die Fenster 45, 46, 47, 77 sind derart ausgebildet, dass sie und die mit ihnen verbundenen Abschnitte der Wandungen 5 bzw. 55 ebenfalls praktisch keine Ecken, Nischen oder Kehlen und insbesondere keine Spalte oder Ritzen bilden, in denen sich Staub oder andere Verunreinigungen ablagern können.

Wenn die Behandlung einer Charge des teilchenförmigen Gutes 99 beendet ist, wird die Saugvorrichtung 92 ausgeschaltet, die Förderung von Prozessgas beendet und das Gut 99 aus dem Wirbelschicht-Behälter 3 entnommen. Nach der Beendigung des normalen Betriebs und nach der Entleerung des Gut-Behälters 3 können die an den Gasverteiler-Raum 28 sowie vor allem die an den Wirbel- und Rohgas-Raum 29 angrenzenden Innenflächen der Wandung 5, die Filter 19, der Siebboden 13 und die Innenflächen der Fenster 45, 46, 47 des Gut-Behälters 3 einer Nass-Reinigung unterzogen bzw. gewaschen werden. Ferner können auch die an den Rohgas-Raum 70 angrenzenden Innenflächen der Wandung 55 sowie der Fenster 77 und die Filter 63 des Nachentstaubers 51 einer Nass-Reinigung unterzogen werden. Die Reinigungsflüssigkeits-Zufuhrmittel 96 können wahlweise verschiedenen Nass-Reinigungsvorrichtungen 23, 25, 35, 39, 67, 68 eine Reinigungsflüssigkeit zuführen, deren Druck zum Beispiel 200 kPa bis 600 kPa und deren Temperatur mehr als 0° C, beispielsweise 20° C bis 100° C oder eventuell bis 150° C beträgt. Bei einer Nass-Reinigung werden die Filter und Wände zum Beispiel zuerst mit kaltem Wasser vorgespült, danach mit heissem, mindestens ein Detergens oder sonstiges Waschmittel enthaltendem Wasser gewaschen und schliesslich nochmals mit demineralisiertem Wasser nachgespült. Für die Nass-Reinigung der Filter 19 und der sonstigen im Behälter 3 vorhandenen Teile wird zum Beispiel in jeder Reinigungsphase jeweils zuerst mit den Reinigungsvorrichtungen 23, dann mit der Reinigungsvorrichtung 25 und zuletzt mit den Reinigungsvorrichtungen 39, 35 Reinigungsflüssigkeit zersprüht.

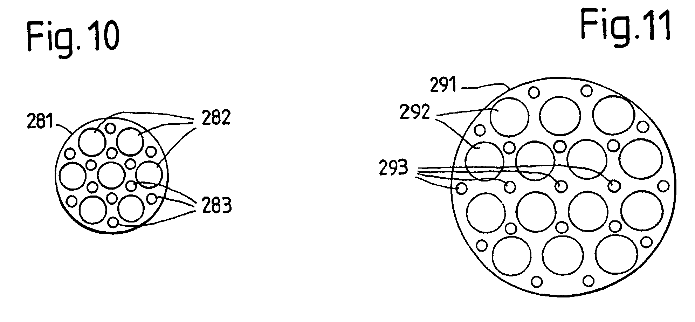

Nun wird angenommen, dass sich das Sprühorgan 185 einer ersten Nass-Reinigungsvorrichtung 23 in der in der Fig. 3 gezeichneten Ruhe-Stellung befindet und die Reinigungsflüssigkeits-Zufuhrmittel 96 dem Flüssigkeits-Einlass 177a dieser Reinigungsvorrichtung 23 eine Reinigungsflüssigkeit zuführen. Die Reinigungsflüssigkeit strömt dann in den Hohlraum 193 des Gehäuses 173 und verschiebt den Kolben 184 entgegen der von der Feder 191 erzeugten Kraft nach unten gegen den Rohgas-Raum 29 in die in der Fig. 4 gezeichnete Stellung, in welcher der Kolben am Führungskörper 179 ansteht. Der Kolben 184 verschiebt das Sprühorgan 185 dabei in dessen in der Fig. 4 ersichtliche Reinigungs- bzw. Sprüh-Stellung. Ein Teil der Stange 186 und der Sprühkopf 187 gelangen bei dieser Verschiebung aus dem Gehäuse 173 und aus dem Loch 111c der Platte 111 heraus in den Rohgas-Raum 29. Der Verschiebungsweg des Sprühorgans 185 ist wesentlich kleiner als die axiale Abmessung der Filter 19. Der Sprühkopf 187 befindet sich in der Reinigungs-Stellung im Höhenbereich der oberen Endabschnitte der Filter 19. Die in der Fig. 10 durch Pfeile angedeutete, der Nass-Reinigungsvorrichtung 23 zugeführte Reinigungsflüssigkeit strömt aus dem Hohlraum 193 durch den Durchgang 194 in den Hohlraum 187f des Sprühkopfs 187 und wird dann durch die Flüssigkeits-Auslasslöcher 189, 190 hindurch in verschiedenen Richtungen aus dem Sprühkopf 187 heraus in den freien Bereich des Rohgas-Raums hinein gesprüht. Die durch die Auslasslöcher 190 zersprühte Reinigungsflüssigkeit erzeugt Schubkräfte. Diese erzeugen ein am Sprühkopf 187 bezüglich der Achse 171 angreifendes Drehmoment, so dass der Sprühkopf 187 um die Achse 171 und Stange 186 herum rotiert und jedes Auslassloch 189, 190 entlang einer Kreisbahn um die Achse 171 herum bewegt wird.

Wenn sich das Sprühorgan 225 der zweiten Nass-Reinigungsvorrichtung 25 in der in der Fig. 8 gezeichneten Ruhe-Stellung befindet und wenn nun dem Flüssigkeits-Einlass 215 dieser Nass-Reinigungsvorrichtung 25 eine unter Druck stehende Reinigungsflüssigkeit zugeführt wird, strömt diese in den Hohlraum 237 und verschiebt den Kolben 224 entgegen der von der Feder 235 erzeugten Kraft in eine Stellung, in der der Kolben am Führungskörper 219 ansteht. Der Kolben 224 verschiebt das Sprühorgan 225 dabei in die in der Fig. 9 gezeichnete Reinigungs- bzw. Sprüh-Stellung, wobei ein Teil des Sprühorgans 225 und insbesondere der Sprühkopf 229 aus dem Gehäuse 203 sowie aus dem Loch 111d der Platte 111 heraus in den Rohgas-Raum 29 verschoben wird. Der Sprühkopf 229 befindet sich dann im Höhenbereich der Filter 19 in der Nähe der oberen Enden von diesen.

Die der zweiten Nass-Reinigungsvorrichtung 25 zugeführte Reinigungsflüssigkeit strömt aus dem Hohlraum 237 durch den Durchgang 238 in den Hohlraum 230c des Sprühkopfs 229 und wird dann durch die Flüssigkeits-Auslasslöcher 232, 233, 234 hindurch im Rohgas-Raum 29 zersprüht. Die aus den Auslasslöchern 234 ausströmende Flüssigkeit erzeugt dabei Schubkräfte, welche den Sprühkopf 229 drehen.

Wenn mindestens eine Nass-Reinigungsvorrichtung 23 oder 25 Reinigungsflüssigkeit zersprüht, trifft die letztere zum Teil auf die Mäntel von Filtern 19, welche sich in der Nähe der betreffenden Reinigungsvorrichtung 23 oder 25 befinden. Beim Besprühen eines Filters gelangt auch Reinigungsflüssigkeit in den hohlen Filter-Innenraum. Wenn die Filter von aussen mit einer Reinigungsflüssigkeit besprüht werden, werden den Filtern über die Gas-Reinigungsvorrichtungen zyklisch abwechsend Reinigungsgas-Impulse zugeführt, so dass die Filter während der Nass-Reinigung impulsweise ausgeblasen werden. Die beim Besprühen in die Filter-Innenräume gelangende Reinigungsflüssigkeit wird dann durch das Reinigungsgas aus den Filtern herausgeblasen und/oder fliesst infolge der Schwerkraft dann am unteren Ende des Mantels durch diesen hindurch wieder aus dem Filter heraus. Die bzw. jede momentan zum Besprühen von Filtern benutzte Nass-Reinigungsvorrichtung 23, 25 sprüht auch Reinigungsflüssigkeit nach oben gegen den Wandungsteil 17 und - abhängig von der Lage der betreffenden Reinigungsvorrichtung - auch gegen die Wandungsteile 8, 9 sowie vielleicht sogar gegen den konischen Wandungsteil 7 und den Siebboden 13.

Wenn die Zufuhr von Reinigungsflüssigkeit zu einer Nass-Reinigungsvorrichtung 23 oder 25 beendet wird, verschiebt die Feder 191 bzw. 235 das Sprühorgan 185 bzw. 225 wieder in die Ruhe-Stellung zurück. Wenn die Besprühung der Filter beendet ist, werden die Filter noch während einer gewissen Zeitdauer intermittierend oder kontinuierlich mit Reinigungsgas ausgeblasen.

Wenn die Reinigungsflüssigkeits-Zufuhrmittel 96 den Nass-Reinigungsvorrichtungen 35 und 39 eine Reinigungsflüssigkeit zuführen, werden die Sprühorgane 37 und 41 in den Behälter-Innenraum 27 hinein verschoben und sprühen diese Reinigungsflüssigkeit gegen den Siebboden 13 und gegen die sich in der Nähe des Siebbodens befindenden Innenflächenabschnitte der Wandung 5, beispielsweise der Wandungsteile 6, 7, 8. Beim Zersprühen von Reinigungsflüssigkeit mit den Vorrichtungen 23, 25, 35, 39 besprühen diese auch das Sprühorgan 44 und die Innenflächen der Fenster 45, 46, 47. Zudem fliesst die beim Zersprühen auf ein Filter oder einen Wandungsteil auftreffende Reinigungsflüssigkeit dann selbstverständlich im Behälter nach unten, so dass mit den Reinigungsvorrichtungen 23, 25, 35, 39 die ganzen, an den Rohgas-Raum 29 angrenzenden Flächen der Filter und auch die ganzen an den Wirbel- und Rohgas-Raum 29 und an den Gasverteiler-Raum 28 angrenzenden Flächen der Wandung 5 gereinigt werden können. Die beim Reinigen der Filter 19 und des Siebbodens 13 zersprühte Flüssigkeit kann beispielsweise durch den Gutauslass 34 oder einen zusätzlichen Auslass aus dem Behälter 3 abgeleitet werden. Beim Besprühen der Filter 19 kann eventuell auch ein wenig Reinigungsflüssigkeit durch die Mäntel der Filter hindurch in den Reingas-Raum 30 gelangen. Diese Flüssigkeit kann durch vorübergehendes Freigeben des Flüssigkeitsauslasses 48 aus dem Reingas-Raum abgeleitet werden. Nach der Nass-Reinigung wird zum Trocknen der Filter und sonstigen vorher mit Reinigungsflüssigkeit besprühten Teile mit den Gasleitmitteln 81 warme, trockene Luft oder ein anderes Gas analog wie beim normalen Betrieb das Prozessgas durch die Behälter und die Filter hindurchgeleitet.

Die Filter 63 des Nachentstaubers 51 und die an den Rohgas-Raum 70 des letzteren angrenzenden Innenflächen der Wandung 55 und der Fenster 77 des Nachentstauber-Behälters 53 können mit den Nass-Reinigungsvorrichtungen des Nachentstaubers in analoger Weise gereinigt werden wie die Filter im Wirbelschicht-Behälter und dessen Wandungs-Innenflächen.

Da die Mäntel 121 der Filter 19 und 63 zylindrische, im Querschnitt kreisförmige Aussenflächen ohne Wellen oder Falten haben und derart ausgebildet sind, dass der Staub beim normalen Betrieb der Wirbelschicht-Einrichtung an den Aussenflächen der Mäntel der Filter abgelagert wird, können die Filter beim Reinigen mit einer Reinigungsflüssigkeit überall gut gereinigt werden. Die Filter können daher bei der Nass-Reinigung normalerweise vollkommen von Staub und allfälligen anderen an ihnen haftenden Verunreinigungsmaterialien befreit werden. Ferner kann bei der Verwendung der Filter zum Filtrieren und Entstauben von Prozessgas und beim Reinigen der Filter nie eine die Filter 19, 63 überbrückende Verbindung zwischen dem Rohgas-Raum 29 bzw. 70 und dem Reingas-Raum 30 bzw. 71 entstehen. Bei einer Nass-Reinigung ist daher praktisch auch keine gegenseitige Kontamination der Rohgas- und Reingas-Räume möglich. Dementsprechend können auch keine aus dem Wirbel- und Rohgas-Raum 29 stammende, feste Stoffe vom Prozessgas in die Umgebung transportiert werden.

Da die Nass-Reinigungsvorrichtungen 23, 25, 67 beim normalen Betrieb der Wirbelschicht-Einrichtung bündig mit der an den Rohgas-Raum 29 bzw. 70 angrenzenden Fläche des Behälter- bzw. Wandungsteils 17 bzw. 61 sind, kann auch die nähere Umgebung der Filter gut sauber gehalten werden. Beim normalen Betrieb allenfalls in die beiden das Plättchen 231 durchdringenden Flüssigkeits-Auslasslöcher 233 der in den Behältern 3 und 53 vorhandenen, zweiten Nass-Reinigungsvorrichtungen 25 bzw. 68 gelangende Verunreinigungen werden beim Zersprühen einer Reinigungsflüssigkeit durch die Auslasslöcher 233 wieder aus diesen herausgespühlt.

Der Siebboden 13 und die Filter 19 bzw. 63 können derart gut innerhalb des sie enthaltenden Behälters gereinigt werden, dass es normalerweise auch bei einem Wechsel des behandelten teilchenförmigen Gutes und des hergestellten Produktes nicht nötig ist, den Siebboden und die Filter auszubauen und ausserhalb der Behälter zu reinigen. Dies ermöglicht, die Reinigung des Siebbodens, der Filter und auch der an die Rohgas-Räume angrenzenden Flächen der Wandungen der Behälter vollständig automatisch, d.h. ohne Mitwirkung von Personen zu reinigen. Dadurch kann vermieden werden, dass menschliche Einflüsse - wie beispielsweise die ungenügende Sorgfalt einer Person bei der Durchführung von Reinigungsarbeiten - die Reinheit und Qualität der hergestellten Produkte beeinträchtigen. Zudem können durch eine Automatisierung der Reinigung Kosten eingespart werden.

Die Anzahl der Filter und die Anzahl der zum Reinigen der Filter dienenden Nass-Reinigungsvorrichtungen können kleiner oder grösser sein als bei der in der Fig. 2 gezeichneten Anordnung. Ein Gut-Behälter enthält jedoch vorzugsweise mindestens zwei Filter. Dagegen könnte ein Nachentstauber-Behälter möglicherweise nur ein Filter enthalten. Die Anzahl und Anordnung der zum Reinigen der Filter dienenden Nass-Reinigungsvorrichtungen kann abhängig von der Anzahl und Anordnung der Filter variieren, wobei vorzugsweise für jedes Filter mindestens zwei und besser mindestens drei um dieses herum verteilte Nass-Reinigungsvorrichtungen vorhanden sind. Der in der Fig. 10 ersichtliche, innere Behälterteil bzw. Wandungsteil 281 hält zum Beispiel sieben Filter 282, von denen eines eine mit der Behälterachse zusammenfallende Achse hat und die anderen um die Behälterachse herum verteilt sind. Ferner sind ein äusserer und ein innerer Kranz mit je sechs identischen Nass-Reinigungsvorrichtungen 283 vorhanden.

In der Fig. 11 ist ein innerer Behälterteil bzw. Wandungsteil 291 dargestellt, an dem 14 Filter 292 und 19 identische Nass-Reinigungsvorrichtungen 293 befestigt sind.

Die Behälter- bzw. Wandungsteile 281 und 291 können zum Beispiel eine Trennwand eines Gut-Behälters oder eines Nachentstauber-Behälters bilden. Die Nass-Reinigungsvorrichtungen 283 und Nass-Reinigungsvorrichtungen 293 können beispielsweise ähnlich wie die ersten Nass-Reinigungsvorrichtungen 23 oder wie die zweiten Nass-Reinigungsvorrichtung 25 ausgebildet sein.

Die Einrichtung und ihr Betrieb können noch in anderer Hinsicht geändert werden. Zum Beispiel kann man bei den inneren Behälter- bzw. Wandungsteilen 17 und 251 die Verstärkungsringe 202 eventuell weglassen, wenn die Platte 111 ausreichend dick ist. Ferner könnte man eventuell nur ein einziges Filter im Behälter anordnen.

Des weiteren könnte man das oder die Filter, die dem bzw. jedem Filter zugeordnete Gas-Reinigungsvorrichtung und die Nass-Reinigungsvorrichtungen statt an einem sich im Behälter befindenden inneren Wandungsteil an einem zur Aussenwand des Behälters gehörenden Wandungsteil, beispielsweise am Deck-Wandungsteil des Behälters befestigen.

Ferner könnte man als Prozessgas und/oder als Reinigungsgas anstelle von Luft ein anderes Gas - beispielsweise Stickstoff - verwenden.

Für weitere Einzelheiten der Einrichtung - insbesondere der Ausbildung der Filter sowie der Gas-Reinigungsvorrichtungen, der Ausbildung sowie Abdichtung des Siebbodens und der Ausbildung der Fenster - sei auf die gleichzeitig unter Beanspruchung der Prioritäten von den Schweizerpatentanmeldungen 3707/95, 3708/95 und 3709/95 eingereichten Patentanmeldungen und die für diese veröffentlichten Publikationen EP-A 0 781 585 bzw. EP-A 0 781 594 bzw. EP-A 0 781 949 verwiesen, deren Inhalt hiermit in die vorliegende Patentanmeldung eingeschlossen wird, soweit sich keine Widersprüche ergeben.

## Patentansprüche

1. Einrichtung zum Entstauben von durch ein teilchenförmiges, beispielsweise zur Bildung eines Arzneimittels dienendes Gut (99) hindurchgeleitetem Gas, mit mindestens einem einen Rohgas-Raum (29, 70) umschliessenden Behälter (3, 53), wobei ein an den Rohgas-Raum (29, 70) angrenzender Wandungsteil (17, 61, 281, 291) mindestens ein in den Rohgas-Raum (29, 70) hineinragendes Filter (19, 63, 282, 292) und mindestens ein Sprühorgan (185, 225) hält, um eine Flüssigkeit gegen eine Aussenfläche des bzw. mindestens eines Filters (19, 63, 282, 292) zu sprühen, wobei das bzw. jedes Filter (19, 63, 282, 292) einen gasdurchlässigen Mantel (121) mit einem metallischen Filtrationselement mit einer an den Rohgas-Raum (29, 70) angrenzenden Aussenfläche aufweist, **dadurch gekennzeichnet, dass** das bzw. jedes Filter (19, 63, 282, 292) unverschiebbar am Wandungsteil (17, 61, 281, 291) befestigt ist, dass der Mantel (121) des bzw. jedes Filters (19, 63, 282, 292) im Wesentlichen formfest sowie im Wesentlichen rotationssymmetrisch zu einer Filterachse ist, dass die Aussenfläche des Mantels (121) im Querschnitt kreisförmig sowie frei von Wellen oder Falten ist, dass der Wandungsteil (17, 61, 281, 291) für das bzw. jedes von ihm gehaltene Sprühorgan (185, 225) ein Loch (111c, 111d) mit einer in den Rohgas-Raum (29, 70) mündenden Mündung aufweist und dass das Sprühorgan (185, 225) von einer Ruhe-Stellung, in der es sich im Wesentlichen auf der dem Rohgas-Raum (29, 70) abgewandten Seite der Mündung des Lochs (111c, 111d) befindet, in den Rohgas-Raum (29, 70) schiebbar ist.

2. Einrichtung nach Anspruch 1, **dadurch gekennzeichnet, dass** der Mantel (121) des bzw. jedes Filters (19, 63, 282, 283, 292) mindestens zwei miteinander versinterte Drahtgewebe mit unterschiedlichen Maschenweiten aufweist und dass das äusserste Drahtgewebe die kleinste Maschenweite hat und als Filtrationselement dient, um beim Hindurchleiten von Gas aus dem Rohgasraum (29, 70) durch den Mantel (121) im Gas enthaltenen Staub an der Aussenfläche abzuscheiden.

3. Einrichtung nach Anspruch 1 oder 2, **dadurch gekennzeichnet, dass** das bzw. jedes Sprühorgan (185, 225) in der Ruhe-Stellung mindestens annähernd bündig mit der an den Rohgas-Raum (29, 70, 269) angrenzenden Fläche (111a) des Wandungsteils (17, 61, 281, 291) ist.

4. Einrichtung nach einem der Ansprüche 1 bis 3, **dadurch gekennzeichnet, dass** für das bzw. jedes Sprühorgan (185, 225) ein Gehäuse (173, 203) am Wandungsteil (17, 61, 281, 291) befestigt ist, und dass das Gehäuse (173, 203) auf die dem Rohgas-Raum (29, 70) abgewandte Seite vom Wandungsteil (17, 61, 281, 291) wegragt und das Loch (111c, 111d) gegen einen an die dem Rohgas-Raum (29, 70) abgewandte Seite des Wandungsteils (17, 61, 281, 291) angrenzenden Raum (30, 71) abschliesst.

5. Einrichtung nach Anspruch 4, **dadurch gekennzeichnet, dass** ein Kolben (184, 224) verschiebbar im Gehäuse (173, 203) geführt und mit dem Sprühorgan (185, 225) verbunden ist, dass ein Flüssigkeits-Einlass (177a, 215) in einen im Gehäuse (173, 203) auf der dem Rohgas-Raum (29, 70) abgewandten Seite des Kolbens (184, 224) vorhandenen Hohlraum (193, 237) mündet, dass der Kolben (184, 224) einen den Hohlraum (193, 237) mit mindestens einem Flüssigkeits-Auslassloch (189, 190, 232, 233, 234) des Sprühorgans (185, 225) verbindenden Durchgang (194, 238) aufweist und dass mindestens eine Feder (191, 235) vorhanden ist, die eine vom Rohgas-Raum (29, 70) weggerichtete Kraft auf den Kolben (184, 224) ausübt.

6. Einrichtung nach einem der Ansprüche 1 bis 5, **dadurch gekennzeichnet, dass** das bzw. jedes Sprühorgan (185, 225) einen um eine Achse (171, 201) drehbaren Sprühkopf (187, 229) mit Flüssigkeits-Auslasslöchern (189, 190, 232, 233, 234) aufweist, die in axialer Projektion verschiedene Winkel mit der Achse (171, 201) bilden und dass mindestens ein Flüssigkeits-Auslassloch (190, 234) derart angeordnet ist, dass der Sprühkopf (187, 229) beim Zersprühen von Flüssigkeit durch die von dieser erzeugte Schubkraft gedreht wird.

7. Einrichtung nach einem der Ansprüche 1 bis 5, **dadurch gekennzeichnet, dass** der Wandungsteil (17, 61, 281, 291) eine an den Rohgas-Raum (29, 70, 319) angrenzende Fläche (111a) besitzt und den Rohgas-Raum (29, 70) gegen einen sich im Behälter (3, 53) befindenden Reingas-Raum (30, 71) abgrenzt und dass der Behälter (3, 53) einen mit dem Reingas-Raum (30, 71) verbundenen Gasauslass (49, 75) aufweist, um aus dem Rohgas-Raum (29, 70) durch mindestens ein Filter (19, 63, 255, 282, 292) hindurch in den Reingas-Raum (30, 71) gelangendes Gas aus dem Reingas-Raum (30, 71) herauszuleiten.

8. Einrichtung nach Anspruch 7, **dadurch gekennzeichnet, dass** sich der Reingas-Raum (30, 71) oberhalb des Wandungsteils (17, 61, 281, 291) befindet, dass mehrere Filter (19, 63, 282, 292) und mehrere Sprühorgane (185, 225) am genannten Wandungsteil (17, 61, 281, 291) gehalten und derart verteilt sind, dass mindestens ein Sprühorgan (185, 225) beim Zersprühen von Flüssigkeit mehrere Filter (19, 63, 282, 292) besprüht, und dass mehrere Filter (19, 63, 282, 292) mit ein und demselben, für diese gemeinsamen Reingas-Raum (30, 71) verbunden sind, so dass Gas aus dem Rohgas-Raum (29, 70) durch verschiedene Filter (19, 63, 282, 292) hindurch in denselben für mehrere Filter (19, 63, 282, 292) gemeinsamen Reingas-Raum (30, 71) gelangen kann.

9. Einrichtung nach einem der Ansprüche 1 bis 8, **dadurch gekennzeichnet, dass** mindestens eine Gas-Reinigungsvorrichtung (20, 64) vorhanden ist, um zeitweise ein Reinigungsgas in einen Filter-Innenraum des bzw. mindestens eines Filters (19, 63, 282, 292) hinein sowie durch den Mantel (121) des Filters (19, 63, 282, 292) hindurch zu leiten und aussen am Mantel (121) des Filters (19, 63, 282, 292) haftenden Staub vom Mantel (121) weg zu blasen.

10. Einrichtung nach Anspruch 7 oder 8 und Anspruch 9, **dadurch gekennzeichnet, dass** für das bzw. jedes Filter (19, 63, 282, 292) eine diesem zugeordnete Gas-Reinigungsvorrichtung (20, 64) mit einer Verschlussvorrichtung (21, 65) und einem Reinigungsgas-Einlass (22, 66) am Wandungsteil (17, 61, 281, 291) befestigt ist und dass die Verschlussvorrichtung (21, 65) ausgebildet ist, um den Filter-Innenraum gegen den Reingas-Raum (30, 71) abzuschliessen, wenn Reinigungsgas durch den Reinigungsgas-Einlass (22, 66) in den Filter-Innenraum geleitet wird.

## Claims

1. Apparatus for removing dust from gas passed through a particulate material (99) serving, for example, for the formation of a drug, having at least one container (3, 53) enclosing a crude gas space (29, 70), a wall part (17, 61, 281, 291) adjacent to the crude gas space (29, 70) holding at least one filter (19, 63, 282, 292) projecting into the crude gas space (29, 70) and at least one spray member (185, 225) in order to spray a liquid against an outer surface of the or at least one filter (19, 63, 282, 292), the or each filter (19, 63, 282, 292) having a gas-permeable casing (121) having a metallic filtration member comprising an outer surface adjacent to the crude gas space (29, 70), **characterized in that** the or each filter (19, 63, 282, 292) is nondisplaceably fastened to the wall part (17, 61, 281, 291), that the casing (121) of the or each filter (19, 63, 282, 292) is substantially dimensionally stable and substantially rotationally symmetrical with respect to a filter axis, that the outer surface of the casing (121) is circular in cross-section and free of waves or folds, that the wall part (17, 61, 281, 291) has, for the or each spray member (181, 225) held by it, a hole (111c, 111d) having a mouth opening into the crude gas space (29, 70) and that the spray member (185, 225) is displaceable from a rest position, in which it is present essentially on that side of the mouth of the hole (111c, 111d) which faces away from the crude gas space (29, 70), into the crude gas space (29, 70).

2. Apparatus according to Claim 1, **characterized in that** the casing (121) of the or each filter (19, 63, 282, 283, 292) has at least two wire fabrics which are sintered together and have different mesh sizes and that the outermost wire fabric has the smallest mesh size and serves as a filtration member in order to precipitate dust contained in the gas on the outer surface on passage of gas from the crude gas space (29, 70) through the casing (121).

3. Apparatus according to Claim 1 or 2, **characterized in that**, in the rest position, the or each spray member (185, 225) is at least approximately flush with that surface (111a) of the wall part (17, 61, 281, 291) which is adjacent to the crude gas space (29, 70, 269).

4. Apparatus according to any of Claims 1 to 3, **characterized in that** a housing (173, 203) for the or each spray member (185, 225) is fastened to the wall part (17, 61, 281, 291) and that the housing (173, 203) projects away from the wall part (17, 61, 281, 291) on the side facing away from the crude gas space (29, 70) and seals the hole (111c, 111d) from a space (30, 71) adjacent to that side of the wall part (17, 61, 281, 291) which faces away from the crude gas space (29, 70).

5. Apparatus according to Claim 4, **characterized in that** a piston (184, 224) is displaceably guided in the housing (173, 203) and is connected to the spray member (185, 225), that a liquid inlet (177a, 215) in the housing (173, 203) opens into a cavity (193, 237) present on that side of the piston (184, 224) which faces away from the crude gas space (29, 70), that the piston (184, 224) has a passage (194, 238) connecting the cavity (193, 237) to at least one liquid outlet hole (189, 190, 232, 233, 234) of the spray member (185, 225) and that at least one spring (191, 235) is present which exerts on the piston (184, 224) a force directed away from the crude gas space (29, 70).

6. Apparatus according to any of Claims 1 to 5, **characterized in that** the or each spray member (185, 225) has the spray head (187, 229) rotatable about an axis (171, 201) and having liquid outlet holes (189, 190, 232, 233, 234) which make different angles with the axis (171, 201) in axial projection and that at least one liquid outlet hole (190, 234) is arranged in such a way that, during spraying of liquid, the spray head (187, 229) is rotated by the shear force generated by said liquid.

7. Apparatus according to any of Claims 1 to 5, **characterized in that** the wall part (17, 61, 281, 291) has a surface (111a) adjacent to the crude gas space (29, 70, 319) and divides the crude gas space (29, 70) from a clean gas space (30, 71) present in the container (3, 53) and that the container (3, 53) has a gas outlet (49, 75) connected to the clean gas space (30, 71) to enable gas entering the clean gas space (30, 71) from the crude gas space (29, 70) through at least one filter (19, 63, 255, 282, 292) to be passed out of the clean gas space (30, 71).

8. Apparatus according to Claim 7, **characterized in that** the clean gas space (30, 71) is present above the wall part (17, 61, 281, 291), that a plurality of filters (19, 63, 282, 292) and a plurality of spray members (185, 225) are held on said wall part (17, 61, 281, 291) and distributed in such a way that at least one spray member (185, 225) sprays a plurality of filters (19, 63, 282, 292) during spraying of liquid, and that a plurality of filters (19, 63, 282, 292) are connected to one and the same clean gas space (30, 71) common to them so that gas from the crude gas space (29, 70) can pass through various filters (19, 63, 282, 292) into the same clean gas space (30, 71) common to a plurality of filters (19, 63, 282, 292).

9. Apparatus according to any of Claims 1 to 8, **characterized in that** at least one gas cleaning device (20, 64) is present in order from time to time to pass a cleaning gas into a filter interior of the or at least one filter (19, 63, 282, 292) and through the casing (121) of the filter (19, 63, 282, 292) and blow dust adhering to the outside of the casing (121) of the filter (19, 63, 282, 292) away from the casing (121).

10. Apparatus according to any of Claims 7 or 8 and Claim 9, **characterized in that**, for the or each filter (19, 63, 282, 292), a gas cleaning device (20, 64), coordinated therewith and having a closure device (21, 65) and a cleaning gas inlet (22, 66), is fastened to the wall part (17, 61, 281, 291) and that the closure device (21, 65) is formed in order to seal the filter interior from the clean gas space (30, 71) if cleaning gas is passed through the cleaning gas inlet (22, 66) into the filter interior.

## Revendications

1. Dispositif de dépoussiérage d'un gaz conduit à travers une matière particulaire (99) servant, par exemple, à former un médicament, comprenant au moins un récipient (3, 53) qui entoure une chambre (29, 70) à gaz brut, une partie de cloisonnement (17, 61, 281, 291) adjacente à ladite chambre (29, 70) à gaz brut et retenant au moins un filtre (19, 63, 282, 292) s'engageant dans ladite chambre (29, 70) à gaz brut, et au moins un organe de pulvérisation (185, 225) afin de pulvériser un liquide contre une face extérieure respective du filtre ou d'au moins un filtre (19, 63, 282, 292), le ou chaque filtre (19, 63, 282, 292) étant respectivement muni d'une enveloppe (121) perméable aux gaz, avec un élément métallique de filtration présentant une face extérieure adjacente à la chambre (29, 70) à gaz brut, **caractérisé par le fait que** le ou chaque filtre (19, 63, 282, 292) est respectivement fixé à la partie de cloisonnement (17, 61, 281, 291) sans aucune faculté de coulissement ; **par le fait que** l'enveloppe respective (121) du ou de chaque filtre (19, 63, 282, 292) est sensiblement résistante à la déformation et présente, pour l'essentiel, une symétrie de révolution vis-à-vis d'un axe de filtre ; **par le fait que** la surface extérieure de l'enveloppe (121) est de section transversale circulaire, et est exempte d'ondulations ou de plis ; **par le fait que** la partie de cloisonnement (17, 61, 281, 291) comporte, pour l'organe de pulvérisation ou chaque organe de pulvérisation (185, 225) dont elle assure respectivement la retenue, un trou (111c, 111d) pourvu d'une embouchure débouchant dans la chambre (29, 70) à gaz brut ; et **par le fait que** l'organe de pulvérisation (185, 225) peut être introduit dans la chambre (29, 70) à gaz brut, par coulissement, à partir d'une position de repos dans laquelle il se trouve, pour l'essentiel, du côté de l'embouchure du trou (111c, 111d) qui est tourné à l'opposé de ladite chambre (29, 70) à gaz brut.

2. Dispositif selon la revendication 1, **caractérisé par le fait que** l'enveloppe respective (121) du ou de chaque filtre (19, 63, 282, 283, 292) comprend au moins deux tressages métalliques solidarisés par frittage et possédant des largeurs de mailles différentes ; et **par le fait que** le tressage métallique situé le plus à l'extérieur possède la plus petite largeur de mailles et sert d'élément de filtration, de telle sorte que de la poussière renfermée par le gaz soit séparée, sur la surface extérieure, lorsque du gaz provenant de la chambre (29, 70) à gaz brut est mis en circulation à travers l'enveloppe (121).

3. Dispositif selon la revendication 1 ou 2, **caractérisé par le fait que**, dans la position de repos, le ou chaque organe de pulvérisation (185, 225) se trouve au moins approximativement dans l'affleurement de la surface (111a) de la partie de cloisonnement (17, 61, 281, 291) qui est limitrophe de la chambre (29, 70, 269) à gaz brut.

4. Dispositif selon l'une des revendications 1 à 3, **caractérisé par le fait qu'**un carter (173, 203), respectivement affecté à l'organe de pulvérisation ou à chaque organe de pulvérisation (185, 225), est fixé à la partie de cloisonnement (17, 61, 281, 291) ; et **par le fait que** ledit carter (173, 203) fait saillie vers le côté de la partie de cloisonnement (17, 61, 281, 291) qui est tourné à l'opposé de la chambre (29, 70) à gaz brut, et obture le trou (111c, 111d) vis-à-vis d'une chambre (30, 71) adjacente audit côté de ladite partie de cloisonnement (17, 61, 281, 291) qui est tourné à l'opposé de ladite chambre (29, 70) à gaz brut.

5. Dispositif selon la revendication 4, **caractérisé par le fait qu'**un piston (184, 224) est guidé à coulissement dans le carter (173, 203), et est relié à l'organe de pulvérisation (185, 225) ; **par le fait qu'**une admission (177a, 215) de liquide débouche dans une cavité (193, 237) présente, dans ledit carter (173, 203), sur le côté dudit piston (184, 224) qui est tourné à l'opposé de la chambre (29, 70) à gaz brut ; **par le fait que** le piston (184, 224) possède un passage traversant (194, 238) reliant ladite cavité (193, 237) à au moins un trou (189, 190, 232, 233, 234) de sortie de liquide, pratiqué dans l'organe de pulvérisation (185, 225) ; et par la présence d'au moins un ressort (191, 235) appliquant, au piston (184, 224), une force dirigée à l'écart de la chambre (29, 70) à gaz brut.

6. Dispositif selon l'une des revendications 1 à 5, **caractérisé par le fait que** le ou chaque organe de pulvérisation (185, 225) est respectivement muni d'une tête de pulvérisation (187, 229) pouvant tourner autour d'un axe (171, 201), et dotée de trous (189, 190, 232, 233, 234) de sortie de liquide qui forment différents angles avec ledit axe (171, 201), en projection axiale ; et **par le fait qu'**au moins un trou (190, 234) de sortie du liquide occupe une position telle que la tête de pulvérisation (187, 229) soit animée d'une rotation, lors de la pulvérisation de liquide, par la force de poussée engendrée par ce dernier.

7. Dispositif selon l'une des revendications 1 à 5, **caractérisé par le fait que** la partie de cloisonnement (17, 61, 281, 291) possède une surface (111a) adjacente à la chambre (29, 70, 319) à gaz brut, et délimite ladite chambre (29, 70) à gaz brut vis-à-vis d'une chambre (30, 71) à gaz pur située dans le récipient (3, 53) ; et **par le fait que** ledit récipient (3, 53) présente une sortie (49, 75) de gaz qui est reliée à la chambre (30, 71) à gaz pur afin d'extraire, de ladite chambre (30, 71) à gaz pur, du gaz parvenant dans ladite chambre (30, 71) à gaz pur en provenance de ladite chambre (29, 70) à gaz brut, en traversant au moins un filtre (19, 63, 255, 282, 292).

8. Dispositif selon la revendication 7, **caractérisé par le fait que** la chambre (30, 71) à gaz pur se trouve au-dessus de la partie de cloisonnement (17, 61, 281, 291) ; **par le fait que** plusieurs filtres (19, 63, 282, 292) et plusieurs organes de pulvérisation (185, 225) sont retenus sur la partie de cloisonnement précitée (17, 61, 281, 291), et sont répartis de façon telle qu'au moins un organe de pulvérisation (185, 225) asperge plusieurs filtres (19, 63, 282, 292) lors de la pulvérisation de liquide ; et **par le fait que** plusieurs filtres (19, 63, 282, 292) sont reliés à une seule et même chambre (30, 71) à gaz pur, qui leur est commune, si bien que du gaz provenant de la chambre (29, 70) à gaz brut peut parvenir, en traversant différents filtres (19, 63, 282, 292), dans la même chambre (30, 71) à gaz pur qui est commune à plusieurs filtres (19, 63, 282, 292).

9. Dispositif selon l'une des revendications 1 à 8, **caractérisé par** la présence d'au moins un dispositif (20, 64) d'épuration par gaz qui est destiné à introduire, par intermittence, un gaz d'épuration dans une chambre intérieure de filtration respective du filtre ou d'au moins un filtre (19, 63, 282, 292), à faire circuler ledit gaz à travers l'enveloppe (121) dudit filtre (19, 63, 282, 292), et à chasser pneumatiquement, de ladite enveloppe (121), de la poussière adhérant extérieurement à ladite enveloppe (121) dudit filtre (19, 63, 282, 292).

10. Dispositif selon la revendication 7 ou 8 et la revendication 9, **caractérisé par le fait qu'**un dispositif (20, 64) d'épuration par gaz, respectivement affecté au filtre ou à chaque filtre (19, 63, 282, 292) et présentant un dispositif obturateur (21, 65) et une admission (22, 66) de gaz d'épuration, est fixé à la partie de cloisonnement (17, 61, 281, 291) ; et **par le fait que** ledit dispositif obturateur (21, 65) est réalisé pour obturer la chambre intérieure de filtration, vis-à-vis de la chambre (30, 71) à gaz pur, lorsque du gaz d'épuration est introduit dans ladite chambre intérieure de filtration à travers ladite admission (22, 66) de gaz d'épuration.
